# EUROPEAN PATENT APPLICATION

(11) **EP 1 236 625 A1**
(43) Date of publication of application: **04.09.2002**
(21) Application number: 00979986.7
(22) Date of filing: 07.12.2000
(51) Int. Cl.: B60R 21/26

(54) **HYBRID INFLATOR**

(30) Priority: 07.12.1999 JP 34717699; 07.12.1999 JP 34717799; 10.02.2000 JP 2000033165; 13.03.2000 JP 2000068130
(71) Applicant: Daicel Chemical Industries, Ltd., Osaka 590-8501 (JP)
(72) Inventor: YAMAZAKI, Masayuki, Himeji-shi, Hyogo 671-1262 (JP); RYOBO, Eiichi, Himeji-shi, Hyogo 671-1114 (JP); YABUTA, Mikio, Himeji-shi, Hyogo 671-1227 (JP)
(74) Representative: Grünecker, Kinkeldey, Stockmair & Schwanhäusser Anwaltssozietät
(86) International application number: JP0008676
(87) International publication number: WO01042062

(57) **Abstract**

A hybrid inflator including an outflow preventing means of a mist is provided.

An outflow pressure of a gas flow which has flowed out of a first gas generating chamber 120 is appropriately limited by a blocking means 160 and part of a mist also adheres to an inner surface 161, and thereby, the mist is prevented from flowing outside.

## Description

### Technical Field to which the Invention belongs

This invention relates to an inflating-type safety system of motor vehicle, and more particularly to a multistage-inflating type hybrid inflator capable of inflating an air bag rapidly and preventing mist from flowing outside, and an air bag system using the same inflator.

The present invention also relates to an inflating-type safety system of motor vehicle, and more particularly to a hybrid inflator capable of inflating an air bag unfailingly and rapidly, and an air bag system using the same inflator.

### Prior Art

With the development of an inflator for an inflating-type safety system of motor vehicle, a hybrid inflator using both a pressurized gas and a solid gas generating agent is attracting attention. A main design requirement for a hybrid inflator is that the inflator inflates an air bag by a predetermined amount in a predetermined time to activate the air bag effectively. Various proposals concerning a structure to meet the requirement have heretofore been made (for example, as referred in JP-A No. 08-282427). Since such a hybrid inflator is manufactured to be installed in a motor vehicle, the weight and dimensions of the inflator, which have influence upon the weight of the motor vehicle, constitute an important design requirement therefor.

Also, in a case of a hybrid inflator including a combination of a pressurized gas and a solid gas generating agent, for example, a structure such that a perchlorate base gas generating agent is used and oxygen is not contained in the pressurized gas, a fine material (mist), which is harmful to a vehicle occupant, is generated by combustion of the gas generating agent in some cases. Such a mist is removed by a screen or the like and is prevented from flowing outside.

Besides, as a basic requirement from a functional aspect, it is essential that the solid gas generating agent is burned reliably and rapidly. With respect to modification for weight reduction of an inflator or the like, it is important to avoid that the function of the inflator is deteriorated and that a disadvantage is caused due to modification in a manufacturing step.

### Disclosure of the Invention

An object of the present invention is to provide a multistage-inflating type hybrid inflator capable of inflating an air bag rapidly without increasing the weight of the inflator and provided with a preventing means which blocks outflow of harmful mist to a vehicle occupant, and an air bag system using the same inflator.

Other object of the present invention is to provide a multistage-inflating type hybrid inflator capable of inflating an air bag unfailingly and rapidly without increasing the weight of the inflator and, an air bag system using the same inflator.

Still other object of the invention is to provide a hybrid inflator capable of reducing the weight of the inflator without deteriorating the function of the inflator and simplifying a manufacturing process, and an air bag system using the same inflator.

### (1) First Invention

The present invention provides a multistage-inflating type hybrid inflator (hereinafter, referred to as "hybrid inflator") for an inflating-type safety system of a vehicle provided with an air bag, which comprises an inflator housing, a gas generator installed in the inflator housing, and an ignition means chamber connected to the gas generator, wherein the interior of the inflator housing is filled with a pressurized medium containing an inert gas, the gas generator having first and second gas generating chambers which include a gas generating means respectively, and a blocking means of a gas flow, which flows out from the first communication hole, being formed at least to surround the first gas generating chamber and between the first communication hole, which makes the first gas generating chamber and the inflator housing communicate with each other, and an inflator housing inner wall surface.

Further, in the above-described hybrid inflator, the present invention provides a hybrid inflator (a hybrid inflator claimed in claim 2) comprising a principal closing means to close, before actuation, a route of the pressurized medium to a discharging port leading outside, and a projectile which utilizes pressure to rupture the principal closing means at the actuation, a tip end of the projectile being disposed in the same space as the space, inside the inflator housing, where the pressurized medium is charged.

In the above-described invention, "a blocking means of a gas flow, which flows out from the first communication hole, being formed at least to surround the first gas generating chamber and between the first communication hole, which makes the first gas generating chamber and the inflator housing communicate with each other, and the inflator housing" may be any means as long as it can change a gas flow, which is generated by combustion of the gas generating agent and flows through the first communication hole, by having the gas flow collided against the blocking means at first. With this change of the gas flow, an outflow speed (outflow pressure) of the gas flow can be suppressed to such an extent that, when the hybrid inflator is assembled in an air bag system, a smooth inflation of the air bag is not disturbed and outflow of a mist can be prevented.

The blocking means of a gas flow may be any means (a first blocking means) as long as it blocks the gas flow flowing out of the first communication hole to change the gas flow, and a second blocking means which blocks a gas flow flowing out of a second communication hole can be provided together with the first blocking means.

An example of As the blocking means of a gas flow can be a plate-like member (which is mounted to obtain a gap between the member and the communication hole to allow passage of the gas flow) or a cylindrical member having an opening portion which is mounted to cover the periphery of the first communication hole (or the first communication hole and the second communication hole) between the first communication hole (or the first communication hole and the second communication hole) and the inflator housing. The opening portion of the cylindrical member may have such a size that the gas flow can pass smoothly, and one or at least two opening portions can be formed.

Also, when the above-described cylindrical member is used as the blocking means of a gas flow, the cylindrical member having one end closed and the other end open is desirable. The opening portion may be directed the same as the gas flow flowing inside the inflator housing at activation or differently therefrom, but it is desirable that it is directed differently, more preferably oppositely.

With the above blocking means, when a first gas flow, which is generated in the first gas generating chamber by combustion of the gas generating means and flows out through the first communication hole, includes a mist, the first gas flow collides against the first blocking means and changes, thereby the outflow pressure can be suppressed. And further, part of the mist included in the first gas flow at this time can be adhered to the above-described struck surface of the first blocking means. Additionally, when a second gas flow, which is generated in the second gas generating chamber by combustion of the gas generating means and flows out of the second communication hole, includes a mist, the same action as the above is obtained in case that a second blocking means is provided. If the second blocking means is not provided, the mist included in the second gas flow collides against an inner wall surface of the inflator housing facing the second communication hole, and part of the mist adheres to the struck surface. Thereafter, even through the second gas flow in which the amount of mist is reduced advances inside the inflator housing, it is prevented that the mist adhered to the first blocking means is scattered by the second gas flow.

Further, as the outflow preventing means of a mist, the above first blocking means, or first and second blocking means can be combined with a means such that the first communication hole and the second communication hole are arranged laterally in different directions, for example, to form the angle of 180°, preferably the angle of 60 to 180°.

Also, in the hybrid inflator of the present invention, such a structure can be employed that the first gas generating chamber and the inflator housing communicate with each other, and the second gas generating chamber and the inflator housing communicate with each other.

### (2) Second Invention

The present invention provides a multistage-inflating type hybrid inflator (hereinafter, referred to as "hybrid inflator") for an inflating-type safety system of a vehicle provided with an air bag, which comprises an inflator housing, a gas generator installed in the inflator housing, and an ignition means chamber connected to the gas generator, wherein the interior of the inflator housing is filled with a pressurized medium containing an inert gas, the gas generator having first and second gas generating chambers which include a gas generating means respectively, and, a plurality of first communication holes, through which the first gas generating chamber and the inflator housing communicate with each other, and a plurality of second communication holes, through which the second gas generating chamber and the inflator housing communicate with each other, are formed so that some or all of the respective communication holes are oriented in different directions in the lateral direction of the inflator housing.

Further, in the above-described hybrid inflator, the present invention provides a hybrid inflator (a hybrid inflator claimed in claim 6) comprising a principal closing means to close, before actuation, a route of the pressurized medium to a discharging port leading outside, and a projectile which utilizes pressure to rupture the principal closing means at the actuation, a tip end of the projectile being disposed in the same space as the space, inside the inflator housing, where the pressurized medium is charged.

In the above-described invention, the passage "a plurality of first communication holes, through which the first gas generating chamber and the inflator housing communicate with each other, and a plurality of second communication holes, through which the second gas generating chamber and the inflator housing communicate with each other are formed so that some or all of the respective communication holes are oriented in different directions in the lateral direction of the inflator housing" means that, a plurality of the first and second communication holes include holes oriented in the same direction in a lateral direction and holes oriented in a different direction. For example, when the number of the first communication holes and the number of the second communication holes are respectively six, cases are included, from a case where one pair of the first and second holes is directed in different direction and the other five pairs are directed in the same direction, to a case where five pairs are directed in different direction and only one pair is directed in the same direction. Also a case where all the six pairs are directed in different directions, is included. In this case, "the lateral direction" in the present invention means a direction towards the periphery of the first and second gas generating chambers, making the center axis in the longitudinal direction of each gas generating chambers as a basic point when sections of the first gas generating chamber and the second gas generating chamber in the lateral direction are circular.

In the hybrid inflator of the present invention, preferably, a plurality of the first communication holes and a plurality of the second communication holes are formed to have the angle of 0 to 180° between themselves along the lateral direction of the inflator housing. In this case, 0° means that the holes are formed in the same directions.

Also, in the hybrid inflator of the present invention, more preferably, a plurality of the first communication holes and a plurality of the second communication holes are formed to have the angle of 60° to 180° between themselves in the lateral direction of the inflator housing. In this case, all of a plurality of the first communication holes and a plurality of the second communication holes are formed in different directions, forming the angle of the described above range between themselves.

A plurality of the first and second communication holes can be arranged circumferentially in plural number, and arranged in plural lines separately from one other in the longitudinal direction of the inflator housing.

Incidentally, when the first gas generating chamber and the second gas generating chamber have a plurality of the first and second communication holes respectively, the first gas generating chamber and the second gas generating chamber can be arranged concentrically or eccentrically to each other inside the inflator housing.

As described above, when a plurality of the first and second communication holes are arranged so that at least one pair of the first and second holes is directed in the different directions, or that all pairs are directed in the different directions, a first gas flow, which is generated in the first gas generating chamber due to combustion of the gas generating means and includes a mist, collies against the inner wall of the inflator housing facing the first communication holes, thereby part of the mist adheres to the struck surface. Meanwhile, a second gas flow, which is generated in the second gas generating chamber due to following combustion of the gas generating means and includes a mist, collies against the inner wall of the inflator housing facing the second communication holes, thereby part of the mist adheres to the struck surface and the second gas flow in which a mist amount is reduced advances inside the inflator housing. At this time, if the first and second communication holes are directed differently in the lateral direction, the second gas flow does not pass over the mist adhered to the inner wall of the inflator housing facing the first communication holes, so that the mist is not scattered. Even if the first and second communication holes are directed in the same direction, only part of the mist is scattered, so that, as a whole, an amount of the scattered mist can be reduced.

Incidentally, in the hybrid inflator, as the outflow preventing means of a mist, a plate-like or a cylindrical blocking means, which can block a gas flow together with a means such that directions of the first communication holes and second communication holes are adjusted, can be provided at least between the first communication holes and the inflator housing facing the holes.

The hybrid inflators of the first and second inventions may be modified to the following embodiments.

In the hybrid inflator of the present invention, such a structure can be employed that inflow passages of gases generated in the first gas generating chamber and the second gas generating chamber towards the inflator housing are independent of each other.

In the hybrid inflator of the present invention, such a structure can be employed that, when the gas generated in the first gas generating chamber flows inside the inflator housing, passing through the independent inflow passage, an inflow passage of the second gas generating chamber is located in the reverse direction of the gas flowing direction with respect to the inflow passage of the first gas generating chamber.

In the hybrid inflator of the invention, the arrangement of the first gas generating chamber and the second gas generating chamber can be properly set, for example, the arrangement such that the first gas generating chamber and the second gas generating chamber are arranged in series adjacently to each other in the longitudinal direction of the inflator housing, the arrangement such that they are arranged in series and to be opposite to each other in the longitudinal direction of the inflator housing, or the arrangement such that they are arranged in parallel in the lateral direction of the inflator housing and adjacent to each other but separately from each other can be employed, and, among these arrangements, the arrangement such that they are arranged in series adjacently to each other in the longitudinal direction of the inflator housing is desirable.

In the hybrid inflator of the present invention, the pressurized medium comprises an inert gas such as argon, helium or the like (nitrogen is also included in the inert gas in the present invention), and it may be composed without including oxygen substantially. In this case, the argon works so as to promote the thermal expansion of the pressurized medium. It is preferable to contain helium in the pressurized medium since the leakage of the pressurized medium can be detected easily, and consequently distribution of imperfect products can be prevented. A charging pressure of the pressurized medium is preferably 10,000 to 70,000 kPa and more preferably, 30,000 to 60,000 kPa.

As the gas generating agents (the first gas generating agent accommodated in the first gas generating chamber and the second gas generating agent accommodated in the second gas generating chamber), it is possible to use a material including fuel and oxidizer, or fuel, oxidizer and slug-forming agent which are mixed together with bonding agent if necessary and formed into a desired shape. If such a gas generating agent is used, a gas generated by its combustion can be supplied together with the pressurized medium for developing the air bag. Especially when the gas generating agent including the slug-forming agent is used, the amount of mist discharged from the inflator can be reduced much.

Preferably, the fuel can be one or two or more materials selected from a group consisting guanidine derivative such as nitroguanidine (NQ), guanidine nitrite (GN), guanidine carbonate, amino nitroguanicine, amino guanidine nitrite, amino guanidine carbonate, diamino guanidine nitrite, diamino guanidine carbonate, and triamino guanidine nitrite. Further as the fuel, one or two or more materials selected from a group comprising tetrazole and tetrazole derivative can be used.

As oxidizer, one or two or more materials selected from a group comprising strontium nitrate, potassium nitrate, ammonium nitrate, potassium perchlorate, copper oxide, ferrous oxide, basic copper nitrate can be used. Preferable composition amount of oxidizer is 10 to 80 parts by weight, and more preferably, 20 to 50 parts by weight with respect to 100 parts by weight of fuel.

Preferably, the slug-forming agent can be one or two or more materials selected from a group consisting of acid clay, talc, bentonite, diatomaceous earth, kaolin, silica, alumina, sodium silicate, silicon nitride, silicon carbide, hydrotalsite, and a mixture thereof. Preferable composition amount of slug-forming agent is 0 to 50 parts by weight, and more preferably, 1 to 10 parts by weight with respect to 100 parts by weight of fuel.

Preferably, the bonding agent can be one or two or more materials selected from a group consisting of sodium salt of sodium carboxymethylcellulose, hydroxyethyl cellulose, starch, polyvinyl alcohol, guar gum, microcrystal cellulose, polyacrylamide and calcium stearate. Preferable composition amount of the bonding agent is 0 to 30 parts by weight, and more preferably, 3 to 10 parts by weight with respect to 100 parts by weight of fuel.

The present invention further provides an air bag system comprising a activation signal-outputting means including an impact sensor and a control unit, and a module case accommodating the above-described hybrid inflator of the first or second invention and an air bag, wherein an inflating rate of the air bag can be controlled.

### (3) Third Invention

A hybrid inflator of the present invention is characterized in an arrangement of an igniting means for igniting a gas generating means accommodated in a gas generating chamber and a plurality of communication holes through which the gas generating chamber and an inflator housing communicate with each other, and it can be applied to a hybrid inflator having one gas generating chamber and a multistage-inflating type hybrid inflator having two or three or more gas generating chambers.

The present invention provides a hybrid inflator for an inflating-type safety system of a vehicle provided with an air bag, which comprises an inflator housing, a gas generator installed in the inflator housing, and an ignition means chamber having an ingnition means connected to the gas generator, wherein the interior of the inflator housing is filled with a pressurized medium containing an inert gas, the gas generator has a gas generating chamber including a gas generating means, and the gas generating chamber and the inflator housing communicate with each other through a plurality of communication holes, and a plurality of the communication holes are disposed to be separated from the igniting means in the lateral direction and/or longitudinal direction of the inflator housing.

The above invention is a hybrid inflator having one gas generating chamber (a single type hybrid inflator), and it is especially suitable for a case where the igniting means connected to the gas generating chamber is arranged eccentrically to the axis in the longitudinal direction of the inflator housing.

Also, the present invention provides a hybrid inflator for an inflating-type safety system of a vehicle provided with an air bag, which comprises an inflator housing, a gas generator installed in the inflator housing, and an ignition means chamber connected to the gas generator, wherein
the interior of the inflator housing is filled with a pressurized medium containing an inert gas,
the gas generator having first and second gas generating chambers including their respective gas generating means, the first gas generating chamber being connected with a first igniting means chamber provided with a first igniting means and the second gas generating chamber being connected with a second igniting means chamber provided with a second igniting means,
the first gas generating chamber and the inflator housing communicate with each other through a plurality of first communication holes, and the second gas generating chamber and the inflator housing communicate with each other through a plurality of second communication holes, and
a plurality of the second communication holes are disposed to be separated from the second igniting means in the lateral direction and/or the longitudinal direction of the inflator housing.

The above-described invention is a multistage-inflating type hybrid inflator having two gas generating chambers (dual type hybrid inflator), and it is especially suitable for a case where the gas generator is arranged in extension of the longitudinal direction of the first igniting means chamber and has a charge-transferring means chamber, and the second igniting means connected to the second gas generating chamber is arranged eccentrically to the center axis in the longitudinal direction of the inflator housing.

Further, the above-described dual type hybrid inflator is especially suitable for a case where the first igniting means chamber and the second igniting means chamber are arranged in parallel in the lateral direction of the inflator housing and adjacent to each other, and the first igniting means chamber is arranged on the center axis in the longitudinal direction of the inflator housing.

In each invention, the passage "a plurality of the communication holes (or a plurality of the second communication holes) are arranged to be separated from the ignition means (or second ignition means) in the lateral direction and/or in the longitudinal direction of the inflator housing" includes three aspects that, with respect to the igniting means (or the second igniting means), a plurality of the communication holes (or a plurality of the second communication holes) are arranged to be separated in the lateral direction, they are arranged to be separated in the longitudinal direction thereof, or they are arranged to be separated in the lateral direction and the longitudinal direction thereof. In this case, the lateral direction of the inflator housing means the direction towards the inflator housing wall on the basis of the center axis extending in the longitudinal direction of the inflator housing.

In a case that a plurality of the communication holes are arranged to be separated in the lateral direction of the inflator housing, it is preferable that all of a plurality of the communication holes (or a plurality of the second communication holes) are arranged to be directed differently in the lateral direction of the igniting means (or the second igniting means) and the inflator housing. Further, in a case where a plurality of the communication holes are arranged to be directed differently in the lateral direction of the inflator housing, it is preferable that all of a plurality of the communication holes (a plurality of the second communication holes) are directed differently to form the angle of 90° or more with the igniting means (or the second igniting means).

In the hybrid inflator, when the communication holes (or the second communication holes) and the igniting means (or the second igniting means) are arranged to be close to each other, combustion of the gas generating means positioned in the vicinity of the communication holes (or the second communication holes) is conducted smoothly, but combustion of the gas generating means positioned far from the communication holes (or the second communication holes) may not be conducted smoothly. However, with the above-described arrangement, combustion of all the gas generating means can be conducted smoothly and uniformly.

Incidentally, in the hybrid inflator of the present invention, as the outflow preventing means for a mist generated by combustion of the gas generating means, there can be provided a means in which the first and second communication holes are formed to be directed differently in the lateral direction of the inflator housing, or a plate-like or a cylindrical blocking means provided at least between the first communication holes and the opposite inflator housing to block a gas flow.

### (4) Fourth Invention

The hybrid inflator of the present invention is characterized in the arrangement of a screen covering communication holes through which the gas generating chamber and the inflator housing communicate with each other, and it can be applied to a hybrid inflator having one gas generating chamber and a multistage-inflating type hybrid inflator having two or three or more gas generating chambers.

The present invention provides a hybrid inflator for an inflating-type safety system of a vehicle provided with an air bag, which comprises an inflator housing, a gas generator installed in the inflator housing, and an ignition means chamber having an ignition means connected to the gas generator, wherein
the interior of the inflator housing is filled with a pressurized medium containing an inert gas,
the gas generator has an outer shell formed of a gas generator housing, the gas generator comprising a gas generating chamber including a gas generating means in the gas generator housing, and the gas generating chamber and the inflator housing communicating with each other through a plurality of communication holes provided in the gas generator housing,
and a screen is provided on outer surface of the gas generator housing at a position where at least a plurality of the communication holes are covered from the outside.

The above-described hybrid inflator has one gas generating chamber, and is provided with the screen on the outer surface of the gas generator housing at a position where at least a plurality of the communication holes are covered. Therefore, as compared with a case where a screen is disposed inside the gas generating chamber, if the same volume of the gas generating chamber has to be secured, the volume of the gas generating chamber can be reduced by the amount corresponding to the size of the screen. On the other hand, even in a case where the screen is disposed outside the gas generating chamber, namely, on the outer surface of the gas generator housing, the smaller the volume of the gas generator is, the more the volume of the inflator housing is increased by the amount corresponding to the reduction, the charging amount of the pressurized medium is not influenced.

Also, the present invention provides a hybrid inflator for an inflating-type safety system of a vehicle provided with an air bag, which comprises an inflator housing, a gas generator installed in the inflator housing, and an ignition means chamber having an ignition means connected to the gas generator, wherein
the interior of the inflator housing is filled with a pressurized medium containing an inert gas,
the gas generator has an outer shell formed of a gas generator housing, the gas generator comprising a first gas generating chamber and a second gas generating chamber including respective gas generating means in the gas generator housing, a first communication hole and a second communication hole are provided in the gas generator housing, the first gas generating chamber and the inflator housing communicate with each other through the first communication hole, and the second gas generating chamber and the inflator housing communicate with each other through the second communication hole,
and a screen is provided on an outer surface of the gas generator housing at a position where at least the first communication hole and/or the second communication hole are covered from the outside.

The above-described hybrid inflator has two gas generating chambers, and the screen is provided (i) at a position where only of the first communication hole of the gas generator housing is covered , (ii) at a position where only the second communication hole of the gas generator housing is covered, or (iii) at a position where both the first communication hole and the second communication hole are covered. With respect to the arrangement of the screen, one aspect can be selected among (i) to (iii) in a view of relations with the other elements and the function of the hybrid inflator, preferably, the screen is disposed at a position where at least the first communication hole of the gas generator housing is covered. As described above, even with the hybrid inflator having two gas generating chambers, the same function as that in the inflator having one gas generating chambers can be obtained.

Further, in the case that the screen is disposed on the outer surface of the gas generator housing as above, it is also advantageous in a manufacturing process. A retainer for adjusting a charge amount (the amount of the gas generating means) or for defining the two gas generating chambers is arranged inside the gas generator housing. In an ordinary manufacturing process, a retainer is inserted/arranged from one end opening of the gas generator housing provided with a screen, and then a gas generating agent is charged. When an inner surface of the gas generator housing is a flat or a curved without inequalities, corresponding to a shape of the housing, by attaching the screen previously, the retainer inserted thereafter abuts on the screen so that it can not be inserted deeper. For this reason, conventionally, part of the outer shape of the gas generator housing where the screen is to be disposed is formed to expand radially (in the lateral direction), in other words, to have a concave inside the housing, the screen is fitted into the concave and thereafter, the retainer is inserted and fitted finally.

However, as described above, if the screen is disposed on the outer surface of the gas generating housing, the inserting position of the screen does not relate to the shape or the gas generator housing any more, and part of the outer and inner shape of the housing does not have to be changed. Therefore, advantageously, the shape of the housing becomes simple and the manufacturing cost is reduced.

The screen used in the hybrid inflator of the present invention is for preventing the gas generating means (gas generating agent) from leaking outside from the communication hole. As long as such a function can be obtained, the material or shape of the screen is not particularly limited, and, for example, a wire mesh, an expanded metal or the like can be used as the screen.

In the hybrid inflators of the above third and forth inventions, a gas generating agent(gas generating means) accommodated in one gas generating chamber for a single type hybrid inflator, or a first gas generating agent accommodated in the first gas generating chamber and a second gas generating agent (gas generating means) accommodated in the second gas generating chamber for a dual type hybrid inflator can be determined based on a relation with composition of pressurized medium charged in the inflator housing.

### 1) the pressurized medium including oxygen:

When the pressurized medium consists of oxygen and an inert gas such as argon, helium (nitrogen is also included in the inert gas in the present invention), etc., the oxygen works so as to convert carbon monoxide and hydrogen generated due to the combustion of a gas generating agent as a gas generating means into carbon dioxide and vapor, while argon works so as to promote the thermal expansion of the pressurized medium. It is preferable to contain helium in the pressurized medium since the leakage of the pressurized medium can be detected easily, for the purpose of preventing distribution of the imperfect products. Concrete compositions of the pressurized medium including oxygen are determined in accordance with gas generating agent to be used and a kind thereof, and the content of oxygen is preferably about 8 to 30 mol%. A charging pressure of the pressurized medium (=pressure in the inflator housing) is preferably 10,000 to 70,000 kPa and more preferably, 30,000 to 60,000 kPa.

As the gas generating agent in the single type hybrid inflator and the dual type hybrid inflator, a gun propellant can be used for example. As the gun propellant, a single-base gun propellant, a double-base gun propellant and a triple-base gun propellant can be used. In addition to them, it is possible to use a gun propellant obtained by mixing a secondary explosive, a bonding agent, a plasticizer and a stabilizer and the like, and molding the resultant mixture to a desired shape.

The secondary explosive can include hexahydrotrinitrotriazine (RDX), cyclotetramethylene tetranitramine (HMX), pentaerithritol tetranitrate (PETN) and triaminoguanidine nitrate (TAGN). For example, when a gas generating agent using RDX as a secondary explosive is burned in an oxygen-absent atmosphere under a pressure of 20,670 kPa and at a combustion temperature of 3348 K, a formed gas in a combustion gas comprises 33 mol% of nitrogen, 25 mol% of carbon monoxide, 23 mol% of vapor, 8 mol% of carbon dioxide and other gas components.

The bonding agent can include cellulose acetate, cellulose acetate butylate, cellulose acetate propionate, ethyl cellulose, polyvinyl acetate, azide polymer, polybutadiene, polybutadiene hydride and polyurethane; the platicizer can include trimethylolethane trinitrate, butantriol trinitrate, nitroglycerine, bis (2,2-dintropropyl) acetal/formal, glycidyl azide and acetyltriethl citrate and the like; and the stabilizer can include ethlcentralite, diphenylamine and loesosinol.

A preferable ratio of the secondary explosive to the bonding agent, plasticizer and stabilizer is about 50 to 90 wt.% of secondary explosive to about 10 to 50 wt.% of bonding agent, plasticizer and stabilizer in all.

It is difficult in some cases to burn the gas generating agent of the above-described composition under normal pressure. However, in the hybrid inflator according to the present invention, since the interior thereof is maintained at a high pressure in advance, the gas generating agents can be burned stably and smoothly.

### 2) the pressurized medium not including oxygen:

When the pressurized medium consists of substantially an inert gas such as argon, helium (nitrogen is also included in the inert gas in the present invention), etc., and when the composition does not contain oxygen, argon works so as to promote the thermal expansion of the pressurized medium. It is preferable to contain helium in the pressurized medium since the leakage of the pressurized medium can be detected easily for the purpose of preventing distribution of the imperfect products. A charging pressure of the pressurized medium is preferably 10,000 to 70,000 kPa and more preferably, 30,000 to 60,000 kPa.

As the gas generating agent accommodated in the single type hybrid inflator and the dual type hybrid inflator, it is possible to use a material including fuel and oxidizer, or fuel, oxidizer and slug-forming agent which are mixed together with bonding agent if necessary and formed into a desired shape. If such a gas generating agent is used, a gas generated by its combustion can be supplied together with the pressurized medium for developing the air bag. Especially when the gas generating agent including the slug-forming agent is used, the amount of mist discharged from the inflator can be reduced much.

Preferably, the fuel can be one or two or more materials selected from a group consisting guanidine derivative such as nitroguanidine (NQ), guanidine nitrite (GN), guanidine carbonate, amino nitroguanicine, amino guanidine nitrite, amino guanidine carbonate, diamino guanidine nitrite, diamino guanidine carbonate, and triamino guanidine nitrite. Further as the fuel, one or two or more materials selected from a group comprising tetrazole and tetrazole derivative can be used.

As oxidizer, one or two or more materials selected from a group comprising strontium nitrate, potassium nitrate, ammonium nitrate, potassium perchlorate, copper oxide, ferrous oxide, basic copper nitrate can be used. Preferable composition amount of oxidizer is 10 to 80 parts by weight, and more preferably, 20 to 50 parts by weight with respect to 100 parts by weight of fuel.

Preferably, the slug-forming agent can be one or two or more materials selected from a group consisting of acid clay, talc, bentonite, diatomaceous earth, kaolin, silica, alumina, sodium silicate, silicon nitride, silicon carbide, hydrotalsite, and a mixture thereof. Preferable composition amount of slug-forming agent is 0 to 50 parts by weight, and more preferably, 1 to 10 parts by weight with respect to 100 parts by weight of fuel.

Preferably, the bonding agent can be one or two or more materials selected from a group consisting of sodium salt of sodium carboxymethylcellulose, hydroxyethyl cellulose, starch, polyvinyl alcohol, guar gum, microcrystal cellulose, polyacrylamide and calcium stearate. Preferable composition amount of the bonding agent is 0 to 30 parts by weight, and more preferably, 3 to 10 parts by weight with respect to 100 parts by weight of fuel.

When the pressurized medium and the gas generating agent having the above-described compositions are used, it is preferable that a molar ratio (A/B) between an amount (A mol) of the pressurized medium and an amount (B mol) of a gas generated due to combustion of the gas generating agent is adjusted to 8/2 to 1/9, and more preferably 8/2 to 3/7.

As described above, the charging amount of the pressurized medium can be reduced by adjusting the molar ratio between the amount of pressurized medium charged in the hybrid inflator and the amount of a gas generated by combustion of the gas generating agent. Therefore, even when the volume of the inflator housing is reduced (i.e., even when the length and/or width (diameter) of the housing is reduced), it is possible to maintain the pressure at the same level as that before the volume is reduced, without enhancing the charging pressure (internal pressure of the housing) of the pressurized medium. In the hybrid inflator of the present invention, the weight ratio (a/b) of the weight (a) of the pressurized medium to the weight (b) of the gas generating agent is preferably 0.1 to 7, and more preferably 0.5 to.5.

In the above hybrid inflator, it is preferable that a pressure index determined by the following formula: rb=αPⁿ (wherein, rb: burning rate, α: coefficient, P: pressure, n: pressure index), at the combustion of the gas generating agent, is smaller than 0.8. The pressure index (n) is preferably 0.2 to 0.7, and more preferably, 0.4 to 0.6.

In this case, the pressure index n is obtained from two formulas, rb₁ = αP₁ⁿ and rb₂ = αP₂ⁿ after a combustion speed rb₁ in a pump of a pressure P₁ (70kg/cm²) and a combustion speed rb₂ in the pump of a pressure P₂ (1,000 kg/cm²) are measured.

Accordingly, when the pressure index (n) is set to less than 0.8, since the combustion speed at the initial stage of combustion of the gas generating means is suppressed from increasing abruptly, increase of a housing internal pressure is small. For this reason, even when the thickness of the housing is reduced, a sufficient pressure resistance can be maintained. Also, since combustion of the gas generating means is conducted stably because the increase of the housing internal pressure is small (namely, change in internal pressure is small), combustion residues of the gas generating means is not generated.

In the hybrid inflator according to the present invention, the relationship between the pressurized medium and the gas generating agent can be set to the above-described combination (1) or (2), but the combination (2) is especially desirable. The above-described respective constituent elements can be combined in any manner and used.

Further, the present invention provides an air bag system comprising an actuation signal-outputting means including an impact sensor and a control unit, and a module case accommodating the above-described hybrid inflator of the above-described third or fourth invention and an air bag.

Since the hybrid inflators of the first and second inventions include two gas generating chambers, it is possible to inflate and develop the air bag at a time of vehicle collision smoothly and reliably, thereby enhancing the safety. Further, the interior is maintained at a high pressure, so that combustion of the gas generating agent is stabilized. Even when two gas generating chambers are provided, an increase in the volume and weight of the hybrid inflator itself can be suppressed by adjusting the arrangement of the two gas generating chambers. In addition, since mist is prevented from flowing outside, the air bag is prevented from being injured by the mist.

Since the hybrid inflator of the third invention includes two gas generating chambers, it is possible to inflate and develop the air bag at a time of vehicle collision smoothly and reliably, thereby enhancing the safety. Further, the interior is maintained at a high pressure, so that combustion of the gas generating agent is stabilized. Even when two gas generating chambers are provided, an increase in the volume and weight of the hybrid inflator itself can be suppressed by adjusting the arrangement of the two gas generating chambers.

In the hybrid inflator of the fourth invention, the screen covering the communication hole through which the gas generating chamber and the inflator housing communicate with each other is arranged on the outer surface of the gas generator housing, so that the volume of the gas generating chamber can be reduced by the amount corresponding to the screen.

### Brief Description of the Drawings

Fig. 1 is a cross-sectional view showing an embodiment of the first invention.
Fig. 2 is a cross-sectional view showing an embodiment of the first invention.
Fig. 3 is a cross-sectional view showing an embodiment of the second invention.
Fig. 4 is a sectional view of a hybrid inflator in the lateral direction, for explaining an arrangement of first communication holes and second communication holes.
Fig. 5 is a sectional view of a hybrid inflator in the lateral direction, for explaining other arrangement of the first communication holes and the second communication holes.
Fig. 6 is a sectional view of a hybrid inflator in the lateral direction, for explaining other arrangement of the first communication holes and the second communication holes.
Fig. 7 is a schematic perspective view of a gas generator, for explaining an arrangement of the first communication holes and the second communication holes.
Fig. 8 is a cross-sectional view showing an embodiment of a hybrid inflator of the third invention.
Fig. 9 is a sectional view in the lateral direction of the hybrid inflator in Fig. 8, for explaining an arrangement of the first communication holes.
Fig. 10 is a sectional view in the lateral direction of the hybrid inflator in Fig. 8, for explaining an arrangement of the second communication holes and an igniting means.
Fig. 11 is a cross-sectional view showing an embodiment of the hybrid inflator of the third embodiment.
Fig. 12 is a cross-sectional view showing an embodiment of a hybrid inflator of the fourth invention.

### Description of reference numerals

- 100: hybrid inflator
- 102: inflator housing
- 110: charge-transferring means chamber
- 114: igniting means chamber
- 115: first igniting chamber
- 117: first igniting initiator
- 120: first gas generating chamber
- 124: first gas generating agent
- 125: first communication hole
- 130: second gas generating chamber
- 134: second gas generating agent
- 135: second communication hole
- 140: second igniting initiator
- 141: second igniting chamber
- 150: gas inflow space
- 160: cylindrical member
- 162: gas flow path
- 166: gas inflow port
- 170: adapter
- 175: projectile
- 178: principal rupturable plate
- 180: diffuser
- 182: diffuser port
- 190: stud bolt

### Preferred Embodiment of the Present Invention

### (1) Embodiment of a first invention

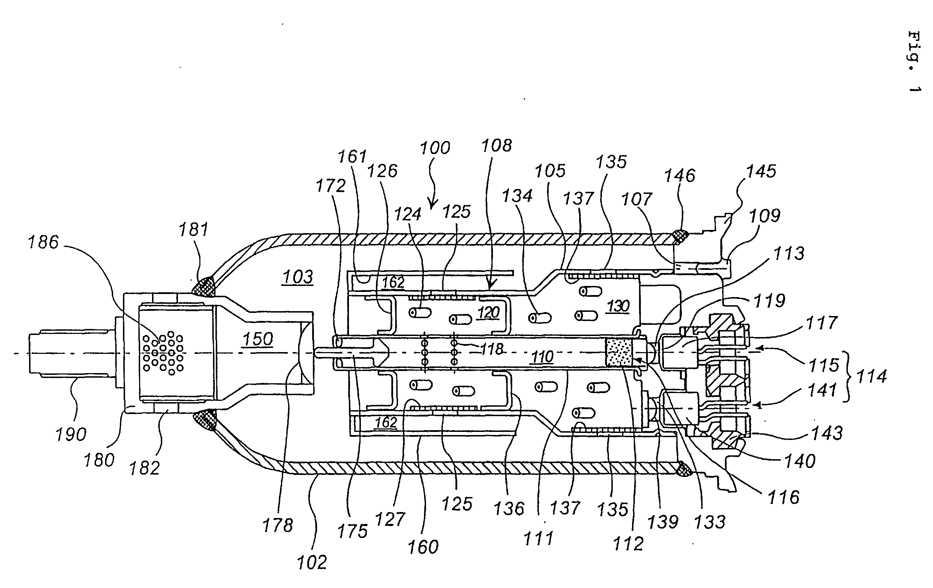

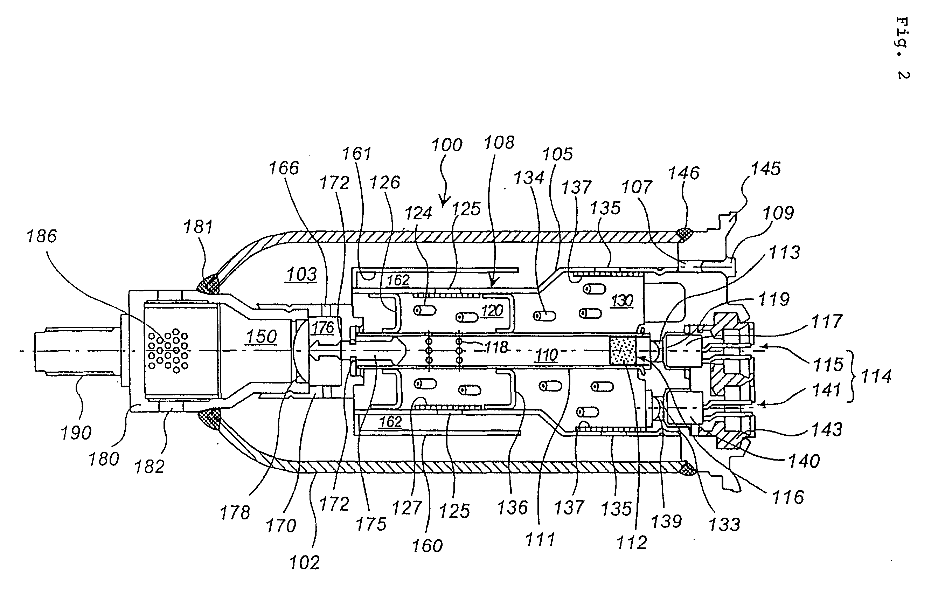

The first invention will be explained below in detail with reference to the drawings showing an embodiment of the first invention. Fig. 1 is a sectional view of a hybrid inflator 100 showing the first embodiment in the longitudinal direction. Fig. 2 is a sectional view of a hybrid inflator 100 showing the second embodiment in the longitudinal direction.

The hybrid inflator 100 will be explained based on Fig. 1. As shown in Fig.1, an inflator housing 102 comprises a cylindrical pressure resisting container, and its inner space 103 is filled with a pressurized medium and maintained at a high pressure. The pressurized medium is usually charged from a small hole 107 formed in a boss 145 connected to one end of the inflator housing 102, and the small hole 107 is closed with a seal pin 109 after the pressurized medium was charged. The inflator housing 102 can be formed to have an uniform outer diameter except its end portion on the side of a diffuser 180 (flat outer shape without constriction or the like).

A gas generator 108 includes a charge-transferring means chamber 110 which is surrounded by a first gas generating chamber 120 and a second gas generating chamber 130 arranged in series and adjacently to each other in the longitudinal direction of the inflator housing 102. The gas generator 108 is disposed in the inflator housing 102, and one end thereof in the longitudinal direction is fixed to the boss 145 by welding.

The charge transferring means chamber 110 comprises a cylindrical housing 111, and is connected to a first initiator 117 through a booster cup 116 in which a booster agent (transfer charge) 112 is charged and a first communication passage 113 closed by a first rupturable plate 119 as a first closing means. The charge transferring means chamber 110 communicates with the first gas generating chamber 120 through flame transferring holes 118.

The first gas generating chamber 120 is disposed to surround the charge transferring means chamber 110, and is defined by the cylindrical housing 105, the housing 111 of the charge transferring means chamber 110, a first partition wall 126 and a second partition wall 136. A desired amount of a first gas generating agent 124 is accommodated as a gas generating means in the first gas generating chamber 120. The first gas generating chamber 120 and the inflator housing 102 communicate with each other through a first communication holes 125 through a screen 127.

The second gas generating chamber 130 is defined by the cylindrical housing 105, the housing 111 of the charge transferring means chamber 110, the second partition wall 136 and the boss 145 (and second rupturable plate 139). A desired amount of a second gas generating agent 134 is accommodated therein as a gas generating means. The second gas generating chamber 130 and the inflator housing 102 communicate with each other through a second communication holes 135 through a screen 137. The second gas generating chamber 130 is connected to a second igniting initiator 140 through a second communication passage 133 closed by a second rupturable plate 139 serving as a second closing means.

An amount of the second gas generating agent 134 can be equal to, larger or smaller than an amount of the first gas generating agent 124, and shapes and compositions of the first and second gas generating agents may be the same or different from each other. Volumes of the first gas generating chamber 120 and the second gas generating chamber 130 may be the same or different from each other, and the volumes can be adjusted by the first partition wall 126 and the second partition wall 136.

As described above, the charge transferring means chamber 110 communicates with the first gas generating chamber 120, the first gas generating chamber 120 communicates with the inflator housing 102, and further, the second gas generating chamber 130 communicates with the inflator housing 102. With this structure, pressures in the charge transferring means chamber 110, the first gas generating chamber 120 and the second gas generating chamber 130 are maintained at high level, i.e., at the same level as the pressure in the inflator housing 102 (inner space 103) .

The first gas generating chamber 120 and the second gas generating chamber 130 are disposed adjacent to each other in series in the longitudinal direction of the inflator housing 102. By disposing these chambers in series in this manner, even when the gas generating chamber is divided into two, the entire size of the hybrid inflator can be made compact, and weight increase can be limited.

The first gas generating chamber 120 and the second gas generating chamber 130 have independent passages through which gases generated by the respective combustion of the first gas generating agent 124 and the second gas generating agent 134 flow into the inflator housing 102. That is, the gas generated in the first gas generating chamber 120 flows into the inflator housing 102 from the first communication hole 125 via the screen 127, and the gas generated in the second gas generating chamber 130 flows into the inflator housing 102 from the second communication hole 135 via the screen 137.

The first and second gas generating chambers 120, 130 are disposed in such a manner that, when the gas generated in the first gas generating chamber 120 flows towards a diffuser port 182 inside the inflator housing 102 after passing through the first communication holes 125 of an inflow passage, the second communication holes 135 which is an inflow passage of the second gas generating chamber 130 is located in the reverse direction of the gas flowing direction with respect to the first communication holes 125 which is an inflow passage of the first gas generating chamber 120.

By disposing the first and second gas generating chambers 120, 130 in this manner, combustion in the first gas generating chamber 120 does not affect the one in the second gas generating chamber 130. Such a layout is effective in that combustion in the first gas generating chamber 120 does not affect the one in the second gas generating chamber 130 when the pressurized medium does not contain oxygen. The order of disposing the first gas generating chamber 120 and the second gas generating chamber 130 may be reversed.

In Fig. 1, a cylindrical member 160, which has one end closed and the other end open, is provided as a blocking means of the gas flow to surround the first gas generating chamber 120 and to enclose the first communication hole 125 from the outside. A flow path 162 which conducts a gas flow flowing out of the first communication hole 125 only in one direction is formed between an inner surface 161 of the cylindrical member 160 and an outer surface of the housing 105.

An ignition means chamber 114 formed in the boss 145 includes the first and second ignition chambers 115, 141. The first ignition chamber accommodates the first initiator 117, and the second ignition chamber accommodates the second initiator 140. The first and second ignition chambers can be disposed in parallel, adjacent to each other in the widthwise direction of the inflator housing 102.

The first initiator 117 and the second initiator 140 are mounted to the boss 145 through an initiator collar 143. The boss 145 is fixed to the inflator housing 102 at a connecting portion 146 by welding or the like.

A projectile 175 having the illustrated shape for rupturing a principal rupturable plate 178 at actuation is mounted to one end of the charge-transferring means chamber 110 so that the projectile 175 straddles the charge-transferring means chamber 110 and the inner space 103 of the inflator housing 102 through an O-ring 172. As illustrated, a tip end of the projectile 175 (a portion of the projectile 175 in the principal rupturable plate 178 side) is located in the inner space 103.

In the case of the hybrid inflator 100 of the embodiment shown in Fig. 2, the projectile 175 is located in the inner space 176 of an adapter 170. Reference numeral 166 denotes a gas inflow port.

A diffuser 180 is connected to one end of the inflator housing 102. The diffuser 180 is fixed at its connecting portion 181 by welding. The main rupturable plate 178 as the main closing means is mounted to the end of the diffuser 180 facing the projectile 175 in order to block a moving path of the pressurized medium towards the diffuser port 182 before activation. Therefore, before activation, a gas inflow space 150 and the inner space 103 of the inflator housing 102 are completely isolated from each other and thus, transmittance of the pressurized medium is blocked out.

The diffuser 180 is provided at the other end with a plurality of diffuser ports 182 for sending the pressurized medium to the air bag and also with a diffuser screen 186 for removing fine particles. A stud bolt 190 for connecting the diffuser 180 with the air bag module is fixed to the outer face of the diffuser 180.

In the hybrid inflator 100, it is preferable that the above-described constituent elements are arranged symmetrically in the widthwise direction with respect to the center axis (shown as the chain line in Fig. 1), but some or all of the constituent elements may be arranged eccentrically with respect to the center axis.

In the hybrid inflator of the present invention, the arrangement of the first and second gas generating chambers can be varied as described below.

For example, the first gas generating chamber 120 and the second gas generating chamber 130 can be arranged to face each other on the opposite sides inside the inflator housing 102. In this case, the pressurized medium is charged into the space between the first gas generating chamber 120 and the second gas generating chamber 130.

Further, for example, in the inflator housing 120, the first gas generating chamber 120 (or the second gas generating chamber 130) may be disposed to surround the charge transferring means chamber 110, and the second gas generating chamber 130 (or the first gas generating chamber 120) may be disposed to surround the first gas generating chamber 120.

The air bag system of the present invention comprises an activation-signal outputting means including an impact sensor and a control unit, and a module case in which the hybrid inflator 100 and an air bag are accommodated. The hybrid inflator 100 is connected to the activation-signal outputting means (the impact sensor and the control unit) on the side of the first initiator 117 and the second initiator 140, and the hybrid inflator 100 is connected and fixed by screwing the stud bolt 190 into the module case in which the air bag is mounted. In the air bag system having such a structure, it is possible to adjust an amount of gas generated in accordance with a degree of the impact, and to adjust the inflating speed of the air bag by appropriately setting the output condition of the activation signal in the activation-signal outputting means.

Next, the operation of the hybrid inflator 100 showing the first and second embodiments will be explained with reference to Figs. 1 and 2.

Before the hybrid inflator 100 is activated, the pressurized medium stored in the inflator housing 102 under a high pressure has flowed into the first gas generating chamber 120 and the second gas generating chamber 130 which communicate with each other by means of the communication holes 125 and 135 respectively, and further has flowed into the charge transferring means chamber 110 through the communication holes 118, and the insides of these chambers are maintained at the same high pressure. Further, the projectile 175 is mounted so as to straddle between the charge transferring means chamber 110 and the inner space 176 which are maintained at the same pressure, and thereby, the malfunction is prevented. And in the embodiment shown in Fig. 2, the projectile 175 is mounted so as to straddle inside the inner space 176 of the adapter which are maintained at the same pressure in the charge transferring means chamber, and thereby, the malfunction is prevented.

In the event of a vehicle collision, the first initiator 117 is ignited by the activation signal outputting means to rupture the first rupturable plate 119 (fixed to the boss 145 forming the first communication hole 113) to ignite and burn the booster agent 112a in the charge transferring means chamber 110, thereby generating a high temperature booster gas. When the pressure inside the charge transferring means chamber 110 is increased by the generated booster gas, the projectile 175 pushed by this pressure moves to rupture the main rupturable plate 178 with the sharp tip end of the projectile 175. At that time, a portion of booster gas flows into the gas inflow space 150 due to the rupture of the main rupturable plate 178.

Most of the booster gas flows into the first gas generating chamber 120 through the flame-transferring holes 118 to ignite and burn the first gas generating agent 124, and a desired amount of a high temperature combustion gas (corresponding to the charged amount of first gas generating agent 124) is generated. At that time, since the pressurized medium has flowed into the first gas generating chamber 120 so that this camber 120 has been maintained at a high pressure, the combustion of the first gas generating agent 124 is stable. Since the charge transferring means chamber 110, the first gas generating chamber 120 and the second gas generating chamber 130 are partitioned from each other by a cylindrical housing 111 and a second partition wall 136, the second gas generating agent 134 is not ignited and burned. Because of the arrangement of the first communication hole 125 of the first gas generating chamber 120 and the second communication holes 135 of the second gas generating chamber 130, the second gas generating agent 134 is not ignited nor burnt by the combustion of the first gas generating agent 124.

Thereafter, since the high temperature combustion gas flows through the first communication hole 125 into the inflator housing 102 to increase the pressure therein, the further pressurized medium flows into the gas inflow space 150 through the ruptured main rupturable plate 178 (in Fig.2, the main rupturable plate 178 ruptured after the pressurized medium passes through the gas inflow hole 166 and the inner space 176). The further pressurized medium which has flowed into the gas inflow space 150 in this manner is ejected from the diffuser port 182 after passing through the diffuser screen 186 and then, inflates the air bag mounted in the air bag module.

The second initiator 140 is ignited by the activation signal outputting means simultaneously when or slightly (about 10 to 40 ms)after the first initiator 134 is activated, and the second rupturable plate 139 (fixed to the boss 145 forming the second communication passage 133) is ruptured and then, the second gas generating agent 134 in the second gas generating chamber 130 is ignited and burnt to generate the desired amount of a high temperature combustion gas (corresponding to the charged amount of the second gas generating agent 134). At that time, since the pressurized medium has flowed into the second gas generating chamber 130 and this chamber 130 has been maintained at high pressure, the combustion state of the second gas generating agent 134 is stable.

The high temperature combustion gas generated by the combustion of the second gas generating agent 134 flows into the inflator housing 102 through the second communication holes 135 to increase a pressure therein, the remaining further pressurized medium flows into the gas inflow space 150 through the ruptured main rupturable disc 178 (in Fig.2, the main rupturable plate 178 ruptured after the pressurized medium passes through the gas inflow hole 166 and the inner space 176), and is ejected from the diffuser port 182 to further inflate the air bag.

In the above-described series of generation and movement courses of the gas flow, mist is prevented from flowing outside the hybrid inflator as described below.

In Fig. 1, the first gas flow, which is generated in the first gas generating chamber 120 and flows out of the first communication hole 125, strikes against an inner surface 161 of the cylindrical member 160 which is the blocking means of a gas flow, and thereby, the gas flow is changed, so that the outflow pressure can be suppressed and part of the mist included in the first gas flow adheres to the struck surface. Thereafter, the first gas flow, in which the outflow pressure is properly suppressed and a mist amount is reduced, flows out into the inflator housing 102 through the gas flow path 162 to advance towards the diffuser 180. Next, the second gas flow generated in the second gas generating chamber 130 to flow out through the second communication hole 135 strikes against an inner wall surface of the inflator housing 102 facing the second communication hole 135 so that a portion of a mist included in the second gas flow adheres to the struck surface. Thereafter, the second gas flow, in which a mist amount is reduced, advances inside the inflator housing 102 towards the diffuser 180. However, since the cylindrical member 160 is closed in the diffuser 180 side, even if the second gas flow advances into the flow path 162, the mist adhered to the inner surface 161 is prevented from being scattered to flow out.

In the above-described hybrid inflator, the combustion gas is generated in two stages in this manner. The first gas generating chamber 120 can act to inhibit an inflating action of the air bag from lagging at a vehicle collision, and the second gas generating chamber 130 enables to let the pressurized medium be discharged completely from the inflator housing 102 and to make the air bag inflated immediately up to the satisfying safety level. In addition, even when a mist is generated, it is prevented from flowing out externally.

Additionally, since two gas generating chambers are provided, this hybrid inflator can also be adapted to an embodiment in which a combustion gas is generated only in the first gas generating chamber 120 alone, an embodiment in which a combustion gas is generated in the first and second gas generating chambers 120 and 130 simultaneously, and an embodiment in which an interval between the timing of generating a combustion gas in the first gas generating chamber 120 and that of generating a combustion gas in the second gas generating chamber 130 is controlled in a desired manner.

Incidentally, the above is the embodiment of the hybrid inflator having two gas generating chambers in the gas generator, but the present invention includes a hybrid inflator in which gas generator has three or more gas generating chambers.

### (2) Embodiment of a second invention

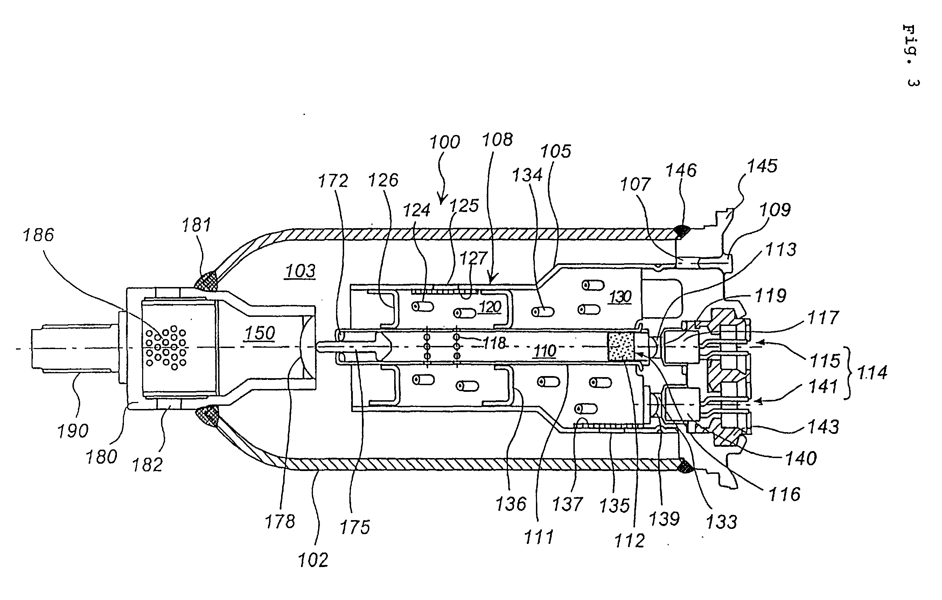

A second invention will be explained below in detail with reference to the drawings showing an embodiment of the second invention. Fig. 3 is a sectional view of a hybrid inflator 100 showing the embodiment of the second invention in the longitudinal direction thereof.

The hybrid inflator 100 of the embodiment shown in Fig. 3 is different from the hybrid inflator 100 of the first embodiment of Fig. 1 in that it does not have the blocking means 160 in the first embodiment of Fig. 1, and it is different in a formation direction of the communication hole from the first embodiment of Fig. 1, as described below, and they are equal to each other with respect to all other constituent elements.

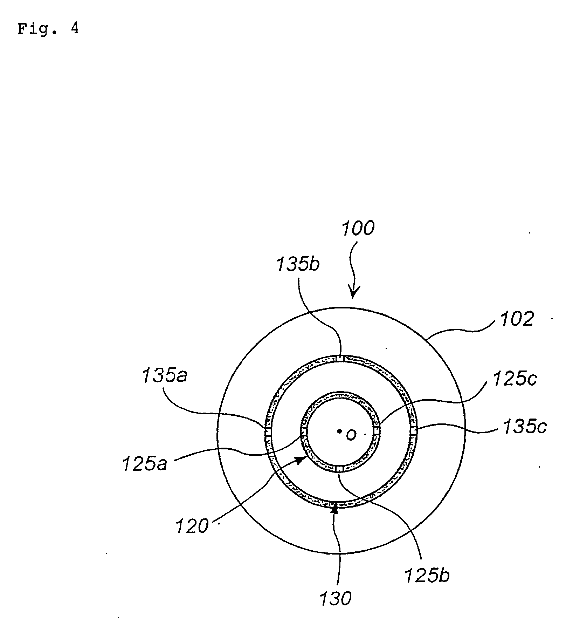

Formation directions of the first communication hole 125 of the first gas generating chamber 120 and the second communication hole 135 of the second gas generating chamber 130 will be explained with reference to Fig. 4, Fig 5 and Fig. 6. Incidentally, Fig. 4, Fig 5 and Fig. 6 is used only for explaining the formation directions of the communication holes, and they are not for showing the volumes, the shapes and the arrangements of the first gas generating chamber 120 and the second gas generating chamber 130.

In Fig. 4, Fig. 5 and Fig. 6, three first communication holes 125a, 125b and 125c are respectively formed in different directions in the first gas generating chamber 120, and three second communication holes 135a, 135b and 135c are respectively formed in different directions in the second gas generating chamber 130.

In Fig. 4, the angle in the lateral direction between the first communication hole 125a and the second communication holes 135a and between the first communication hole 125c and the second communication hole 135c are 0°, and the angle in the lateral direction between the first communication hole 125b and the second communication hole 135b is 180°. In this case, since the angle in the lateral direction between the first communication holes 125a, 125c and the second communication hole 135b are 90°, and the angle in the lateral direction between the first communication hole 125b and the second communication holes 135a, 135c are 90°, the communication holes are formed at angle of 0 to 180° in the lateral direction when viewed as a whole.

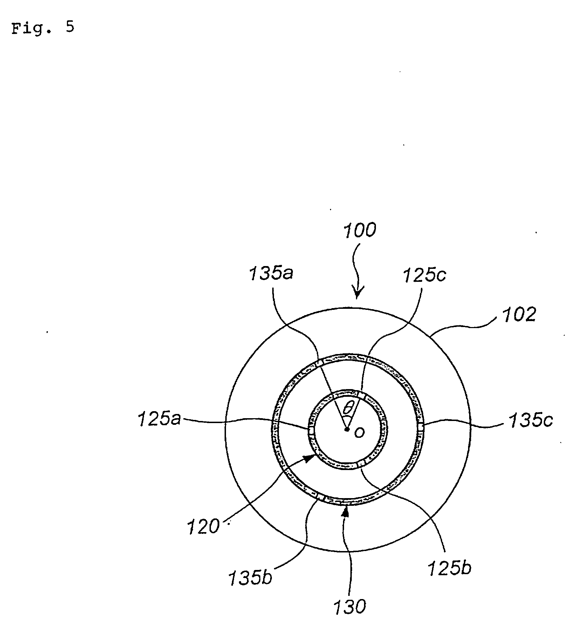

In Fig. 5, the first communication holes 125a, 125b and 125c, and the second communication holes 135a, 135b and 135c are formed in different directions in the lateral direction, forming the same angle (60°). In this case, for example, since the angle in the lateral direction between the first communication hole 125a and the second communication hole 135c is 180°, the communication holes are formed at the angle of 60° to 180° in the lateral direction, when viewed as a whole.

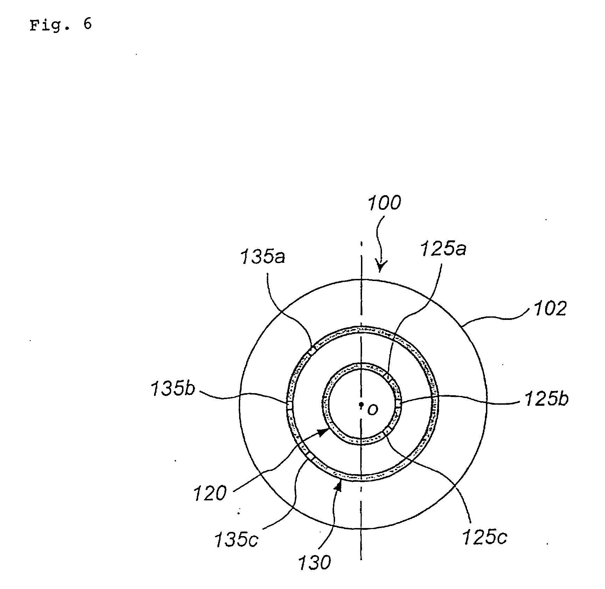

In Fig. 6, the angle in the lateral direction between the first communication hole 125a and the second communication hole 135a is 60°, the angle in the lateral direction between the first communication hole 125b and the second communication hole 135b is 180°, and the angle in the lateral direction between the first communication hole 125c and the second communication hole 135c is 60°. In this case, the angle in the lateral direction between the first communication hole 125a and the second communication hole 135a becomes 90°, and the angle of 60° to 180° are formed in the lateral direction, when viewed as a whole. In the case of the embodiment shown in Fig. 6, when the first gas generating chamber 120 and the second gas generating chamber 130 are divided equally into two parts in the lateral direction, as shown with a dotted line in Fig. 6, all the first communication holes 125a to 125c are arranged on one side thereof, while all the second communication holes 135a to 135c is arranged on the other side thereof.

Incidentally, "lateral direction" in Fig. 4 to Fig. 6 means a direction extending from the reference point O in each figure (the center axis extending in the longitudinal direction of each gas generating chamber, namely, a point coincident with a dotted line in Fig. 3) to the circumferences of the first gas generating chamber 120 and the second gas generating chamber 130. For example, the angle θ in Fig. 5 is an angle formed in the lateral direction.

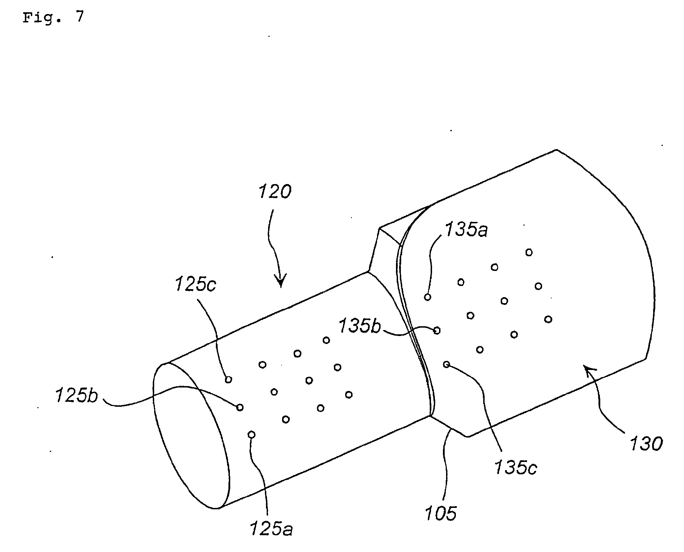

As shown in Fig. 7, the number of the above-described first communication holes 125a to 125c arranged in the circumferential direction is three, and the number of the second communication holes 135a to 135c arranged in the circumferential direction is three, as shown in Fig. 7. These holes can be separated in the longitudinal direction and arranged in a plurality of lines (four lines in Fig. 7). The numbers of the first and second communication holes to be arranged in the circumferential direction is not especially limited, and they are determined optionally considering the angle in the lateral direction. For example, the number of the holes arranged can be two to four or so. Also, the numbers of the first communication holes and the second communication holes arranged in the longitudinal direction may be one to four, for example. Incidentally, Fig. 7 is a schematic perspective view of the gas generating chamber 108, and a portion of the housing 105 (in the second gas generating chamber 130 side) is cut off to make understanding easier.

Also, in the embodiments of Fig. 4 to Fig. 7, the hole diameter of the first and second communication holes can be set to a diameter of 2 to 10mm or so in a case the hole is circular.

Next, referring to Fig. 3 to Fig. 7, the operation of the hybrid inflator 100 showing the embodiment of the second invention will be explained.

The operation in the embodiment of the second invention is the same as that in the first embodiment of Fig. 1 except for an outflow preventing operation for preventing a mist from flowing out of a hybrid inflator, and therefore, only the mist outflow preventing operation will be explained as follows.

In the case that the first and second communication holes are formed in the embodiment shown in Fig. 4, the first gas flow, which is generated in the first gas generating chamber 120 and flows out from the first communication holes 125a to 125c, strikes against an inner wall surface of the inflator housing 102 facing the first communication holes 125a to 125c, and a portion (a first mist) of a mist included in the first gas flow adheres to the struck surface. Thereafter, the first gas flow in which a mist amount is reduced advances inside the inflator housing 102 towards the diffuser 180. Next, the second gas flow, which is generated in the second gas generating chamber 130 and flows out from the second communication holes 135a to 135c strikes against an inner wall surface of the inflator housing 102 facing the second communication holes 135a to 135c, and a portion of a mist included in the second gas flow adheres to the struck surface. In this case, as apparent from Fig. 3, since the first communication holes 125 and the second communication holes 135 are formed at different positions in the longitudinal direction, positions where the mists included in the first and second gas flows adhere are different.

Thereafter, the second gas flow in which a mist amount is reduced advances inside the inflator housing 102 towards the diffuser 180. The first communication hole 125b and the second communication hole 135b are formed in different directions to form the angle of 180° between themselves in the lateral direction, and thereby, the second gas flow passes through a portion opposite to the portion where the first mist has adhered so that the first mist is prevented from being scattered due to the passage of the second gas flow. Thereby, the outflow amount of mist is reduced as a whole, and the remaining mist is blocked by the diffuser screen 186 from flowing out.

In the case that the first and second communication holes are formed in the embodiment shown in Fig. 5, respective communication holes are formed in different directions to form the angle of 60°, and thereby, the second gas flow which has flowed out from the second communication holes 135a to 135c flows out from the first communication holes 125a to 125c, and it does not passes over the mist which has adhered to the inner wall surface of the inflator housing 102. Therefore, the first mist is prevented from being scattered due to the second gas flow, and the amount of outflow of the mist is further reduced as compared with the embodiment of Fig. 4.

In the case that the first and second communication holes are formed in the embodiment shown in Fig. 6, respective communication holes are all formed in different directions, and the first communication holes 125a to 125c and the second communication holes 135a to 135c are arranged on the opposite sides when the gas generating chambers are divided equally into two parts, and thereby, the second gas flow which has flowed out from the second communication holes 135a to 135c flows out from the first communication holes 125a to 125c to pass through the opposite side to the mist adhered to the inner wall surface of the inflator housing 102. Therefore, the amount of outflow of the mist is further reduced as compared with the case of the embodiment shown in Fig. 5.

In above-described hybrid inflator, by generating the combustion gas in two stages in this manner, a delayed start of an air bag's inflating action at the time of a vehicle collision can be prevented by the function of the first gas generating chamber 120, and the pressurized medium charged in the inflator housing 102 can be discharged completely by the function of the second gas generating chamber 130, thereby inflating the air bag immediately up to a satisfying safety level. In addition, even when a mist has occurred, it is prevented from flowing out externally.

Additionally, since two gas generating chambers are provided, this hybrid inflator can also be adapted to an embodiment in which a combustion gas is generated only in the first gas generating chamber 120 alone, an embodiment in which a combustion gas is generated in the first and second gas generating chambers 120 and 130 simultaneously, and an embodiment in which an interval between the timing of generating a combustion gas in the first gas generating chamber 120 and that of generating a combustion gas in the second gas generating chamber 130 is controlled in a desired manner.

Incidentally, the above is the embodiment of the hybrid inflator having two gas generating chambers in the gas generator, but the present invention includes a hybrid inflator in which gas generator has three or more gas generating chambers.

### (3) Embodiment of a third invention

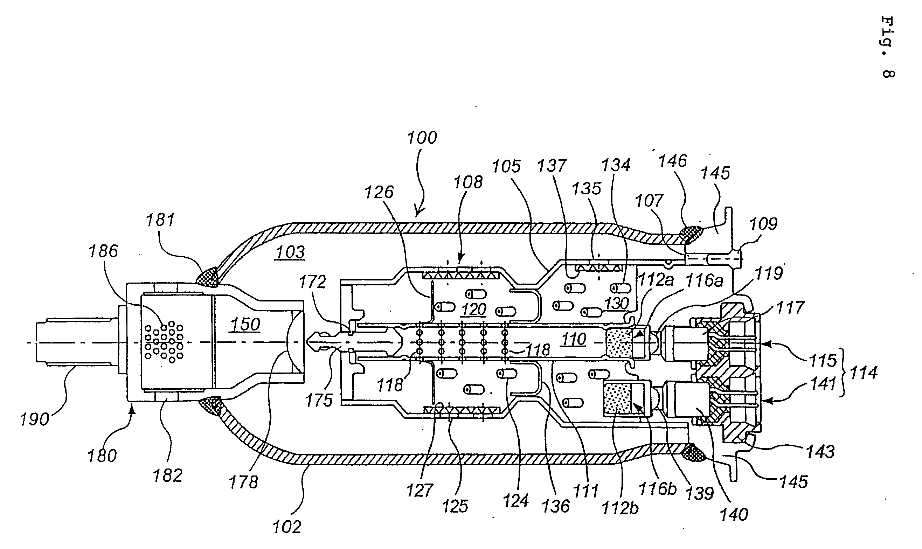

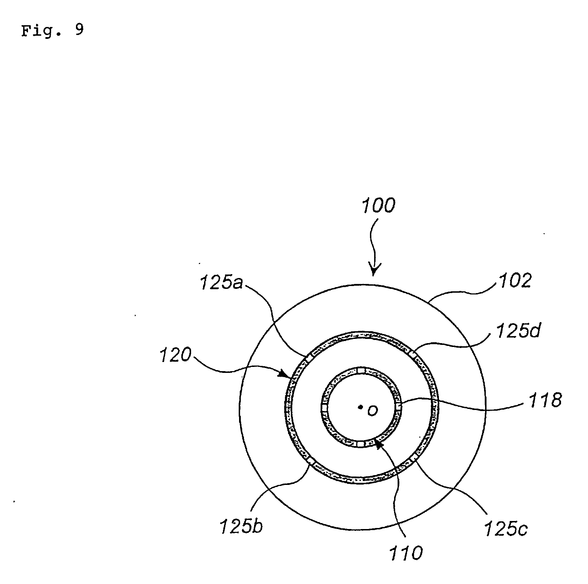

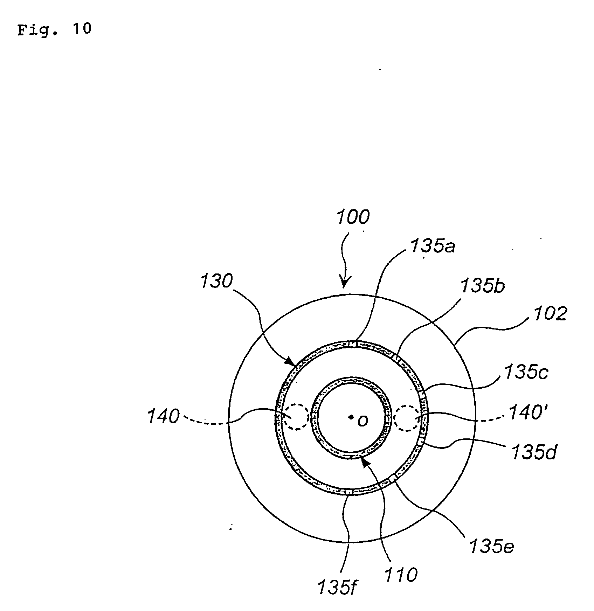

A third invention will be explained below in detail with reference to the drawings showing an embodiment of the third invention. Fig. 8 is a sectional view of an embodiment of a hybrid inflator 100 in the longitudinal direction, Fig. 9 is a sectional view of a first gas generating chamber of Fig. 8 in the lateral direction, and Fig. 10 is a sectional view of a second gas generating chamber in the lateral direction. In this case, the present invention is characterized by arrangement of a plurality of communication holes of a gas generating chamber or a plurality of second communication holes in the second gas generating chamber and an igniting means or a second igniting means, and therefore, by explaining an embodiment of a dual type hybrid inflator shown in Figs. 8 to 10, particularly, Fig. 8 and Fig. 10, an embodiment of a single type hybrid inflator will also be explained substantially.

As shown in Fig.8, an inflator housing 102 comprises a cylindrical pressure resisting container, and its inner space 103 is filled with a pressurized medium and maintained at a high pressure. The pressurized medium is usually charged from a small hole 107 formed in a boss 145 connected to one end of the inflator housing 102, and the small hole 107 is closed with a seal pin 109 after the pressurized medium was charged. The inflator housing 102 can be formed to have an uniform outer diameter except its end portion on the side of a diffuser 180 (flat outer shape without constriction or the like).

A gas generator 108 includes a charge-transferring means chamber 110 which is surrounded by a first gas generating chamber 120 and a second gas generating chamber 130 arranged in series and adjacently to each other in the longitudinal direction of the inflator housing 102. The gas generator 108 is disposed in the inflator housing 102, and one end thereof in the longitudinal direction is fixed to the boss 145 by welding.

The charge transferring means chamber 110 comprises a cylindrical housing 111, and is connected to a first initiator 117 through a booster cup 116a in which a booster agent (transfer charge) 112a is charged and a first communication passage 113 closed by a first rupturable plate 119 as a first closing means. The charge transferring means chamber 110 communicates with the first gas generating chamber 120 through flame transferring holes 118.

The first gas generating chamber 120 is disposed to surround the charge transferring means chamber 110, and is defined by the cylindrical housing (gas generator housing) 105, the housing 111 of the charge transferring means chamber 110, a first partition wall 126 and a second partition wall 136. A desired amount of a first gas generating agent 124 is accommodated as a gas generating means in the first gas generating chamber 120. The first gas generating chamber 120 and the inflator housing 102 communicate with each other through a first communication holes 125 through a screen 127.

Next, the arrangement of the first communication holes 125 of the first gas generating chamber 120 will be explained based on Fig. 9. In this case, Fig. 9 is used only for explaining the arrangement of the communication holes, and does not show the volume, the shape or the like of the first gas generating chamber 120, and the screen 127 is omitted.

In Fig. 9, four first communication holes 125a, 125b, 125c and 125d are respectively formed in the first gas generating chamber 120 in different directions in the lateral direction of the inflator housing 102. As the first communication holes, a total of eight hole with a diameter of 5.4 ± 02.mm can be arranged, that is, four holes arranged in the circumferential direction of the inflator housing 102 and two holes arranged in the longitudinal direction thereof. In this case, the first communication holes 125a, 125b, 125c and 125d, and a plurality of charge-transferring holes 118 of the charge-transferring means chamber 110 are arranged in different directions in the lateral direction of the inflator housing 102.

The second gas generating chamber 130 is defined by the cylindrical housing 105, the housing 111 of the charge transferring means chamber 110, the second partition wall 136 and the boss 145 (and second rupturable plate 139). A desired amount of a second gas generating agent 134 is accommodated therein as a gas generating means. The second gas generating chamber 130 and the inflator housing 102 communicate with each other through a booster agent 112b (116b refers to a booster cup) and a second communication holes 135. The second gas generating chamber 130 is connected to a second igniting initiator 140 through a second communication passage 133 closed by a second rupturable plate 139 serving as a second closing means.

The second igniting initiator 140 is disposed eccentrically with respect to the center axis since the first igniting initiator 117 (first igniting means chamber 115) and the charge-transferring means chamber 110 are arranged on the center axis (a dotted line in Fig. 8) extending in the longitudinal direction of the inflator housing 102.

Next, the arrangement of a plurality of the second communication holes 135 of the second gas generating chamber 130 and the second igniting means (second igniting initiator 140) will be explained based on Fig. 10. In this case, Fig. 10 is used only for explaining the arrangement of the second communication holes and the second igniting means, and does not show the volume, the shape or the like of the second gas generating chamber 130, and the screen 137 is omitted.

In Fig. 10, six second communication holes 135a, 135b, 135c, 135d, 135e and 135f are respectively formed in the second gas generating chamber 130 in different directions in the lateral direction of the inflator housing 102. The arrangement of the second igniting initiator 140 and the second communication holes 135a, 135b, 135c, 135d, 135e and 135f is such that the second igniting initiator 104 and the second communication holes 135a, 135f are arranged to form the angle of 90° in the lateral direction of the inflator housing 102, the second igniting initiator 104 and the second communication holes 135b, 135e are arranged in to form the angle of 126° in the lateral direction, and the second igniting initiator 104 and the second communication holes 135c, 135d are arranged to form the angle of 162° in the lateral direction. As the second communication holes 135, a total of six holes with a diameter of 6.0 ± 0.2 mm are arranged in the circumferential direction of the inflator housing 102.

Incidentally, the term "lateral direction" in Fig. 9 and Fig. 10 means a direction extending from a reference point O in each figure (the center axis extending in the longitudinal direction of the inflator housing 102, namely, a point coincident with a dotted line in Fig. 8) to the circumferences of the first gas generating chamber 120 and the second gas generating chamber 130.

An amount of the second gas generating agent 134 can be equal to, larger or smaller than an amount of the first gas generating agent 124, and shapes and compositions of the first and second gas generating agents may be the same or different from each other. Volumes of the first gas generating chamber 120 and the second gas generating chamber 130 may be the same or different from each other, and the volumes can be adjusted by the first partition wall 126 and the second partition wall 136.

As described above, the charge transferring means chamber 110 communicates with the first gas generating chamber 120, the first gas generating chamber 120 communicates with the inflator housing 102, and further, the second gas generating chamber 130 communicates with the inflator housing 102. With this structure, pressures in the charge transferring means chamber 110, the first gas generating chamber 120 and the second gas generating chamber 130 are maintained at high level, i.e., at the same level as the pressure in the inflator housing 102 (inner space 103).

The first gas generating chamber 120 and the second gas generating chamber 130 are disposed adjacent to each other in series in the longitudinal direction of the inflator housing 102. By disposing these chambers in series in this manner, even when the gas generating chamber is divided into two, the entire size of the hybrid inflator can be made compact, and weight increase can be limited.

The first gas generating chamber 120 and the second gas generating chamber 130 have independent passages through which gases generated by the respective combustion of the first gas generating agent 124 and the second gas generating agent 134 flow into the inflator housing 102. That is, the gas generated in the first gas generating chamber 120 flows into the inflator housing 102 from the first communication hole 125 via the screen 127, and the gas generated in the second gas generating chamber 130 flows into the inflator housing 102 from the second communication hole 135 via the screen 137.

The first and second gas generating chambers 120, 130 are disposed in such a manner that, when the gas generated in the first gas generating chamber 120 flows towards a diffuser port 182 inside the inflator housing 102 after passing through the first communication holes 125 of an inflow passage, the second communication holes 135 which is an inflow passage of the second gas generating chamber 130 is located in the reverse direction of the gas flowing direction with respect to the first communication holes 125 which is an inflow passage of the first gas generating chamber 120.

By disposing the first and second gas generating chambers 120, 130 in this manner, combustion in the first gas generating chamber 120 does not affect the one in the second gas generating chamber 130. Such a layout is effective in that combustion in the first gas generating chamber 120 does not affect the one in the second gas generating chamber 130 when the pressurized medium does not contain oxygen. The order of disposing the first gas generating chamber 120 and the second gas generating chamber 130 may be reversed.

An ignition means chamber 114 formed in the boss 145 includes the first and second ignition chambers 115, 141. The first ignition chamber accommodates the first initiator 117, and the second ignition chamber accommodates the second initiator 140. The first and second ignition chambers can be disposed in parallel, adjacent to each other in the widthwise direction of the inflator housing 102.

The first initiator 117 and the second initiator 140 are mounted to the boss 145 through an initiator collar 143. The boss 145 is fixed to the inflator housing 102 at a connecting portion 146 by welding or the like.

A projectile 175 having the illustrated shape for rupturing a principal rupturable plate 178 at actuation is mounted to one end of the charge-transferring means chamber 110 so that the projectile 175 straddles the charge-transferring means chamber 110 and the inner space 103 of the inflator housing 102 through an O-ring 172. As illustrated, a tip end of the projectile 175 (a portion of the projectile 175 in the principal rupturable plate 178 side) is located in the inner space 103.

A diffuser 180 is connected to one end of the inflator housing 1.02. The diffuser 180 is fixed at its connecting portion 181 by welding. The main rupturable plate 178 as the main closing means is mounted to the end of the diffuser 180 facing the projectile 175 in order to block a moving path of the pressurized medium towards the diffuser port 182 before activation. Therefore, before activation, a gas inflow space 150 and the inner space 103 of the inflator housing 102 are completely isolated from each other and thus, transmittance of the pressurized medium is blocked out.

The diffuser 180 is provided at the other end with a plurality of diffuser ports 182 for sending the pressurized medium to the air bag and also with a diffuser screen 186 for removing fine particles. A stud bolt 190 for connecting the diffuser 180 with the air bag module is fixed to the outer face of the diffuser 180.

In the hybrid inflator 100, it is preferable that the above-described constituent elements are arranged symmetrically in the widthwise direction with respect to the center axis (shown as the chain line in Fig. 8), but some or all of the constituent elements may be arranged eccentrically with respect to the center axis.

In the hybrid inflator of the present invention, the arrangement of the first and second gas generating chambers can be varied as described below.

For example, the first gas generating chamber 120 and the second gas generating chamber 130 can be arranged to face each other on the opposite sides inside the inflator housing 102. In this case, the pressurized medium is charged into the space between the first gas generating chamber 120 and the second gas generating chamber 130.

Further, for example, in the inflator housing 120, the first gas generating chamber 120 (or the second gas generating chamber 130) may be disposed to surround the charge transferring means chamber 110, and the second gas generating chamber 130 (or the first gas generating chamber 120) may be disposed to surround the first gas generating chamber 120.

The air bag system of the present invention comprises an activation-signal outputting means including an impact sensor and a control unit, and a module case in which the hybrid inflator 100 and an air bag are accommodated. The hybrid inflator 100 is connected to the activation-signal outputting means (the impact sensor and the control unit) on the side of the first initiator 117 and the second initiator 140, and the hybrid inflator 100 is connected and fixed by screwing the stud bolt 190 into the module case in which the air bag is mounted. In the air bag system having such a structure, it is possible to adjust an amount of gas generated in accordance with a degree of the impact, and to adjust the inflating speed of the air bag by appropriately setting the output condition of the activation signal in the activation-signal outputting means.

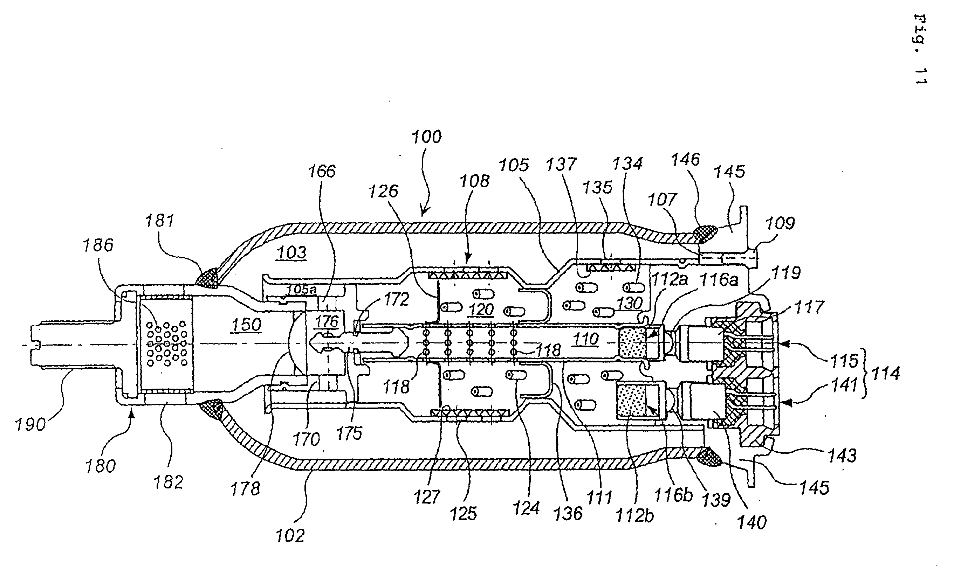

Next, a hybrid inflator 100 of Fig. 11 showing other embodiment of the present invention will be explained. Fig. 11 is a sectional view of the hybrid inflator in the longitudinal direction thereof, and the same reference numerals as these in Fig. 8 denote the same parts.

An adapter 170 is connected in extension of the charge transferring means chamber 110. A projectile 175 having the illustrated shape for rupturing a main rupturable disc 178 at the time of activation is mounted, through an O-ring 172, to an opening that brings the charge transferring means chamber 110 and the adapter 170 into communication with each other such that the projectile 175 straddles the charge transferring means chamber 110 and the adapter 170. A tip end of the projectile 175 is located in the inner space 176 of the adapter 170. The inner space 176 and the inner space 103 of the inflator housing 102 communicate only through a required number of gas inflow holes 166 provided on a surface of the adapter 170 facing an inner surface of the housing (gas generator housing) 105. In the embodiment in Fig. 11, a gas flow path 105a is formed by the inner surface of the housing 105 and an outer surface of the adapter 170. Therefore, the pressurized medium in the inner space 103 flows into the gas inflow holes 166 inevitably through the gas flow path 105a at the time of activation. Even in the hybrid inflator shown in Fig. 11, the second communication hole 135 and the second igniting initiator 140 are arranged as in the embodiment of Fig. 10, and the first communication hole 125 is arranged as in the embodiment of Fig. 9.

Next, one embodiment of the arrangement of the first communication holes and the second communication holes in the circumferential direction and the longitudinal direction will be described with reference to Fig. 7.

The first communication holes 125 of the first gas generating chamber 120 and the second communication holes 135 of the second gas generating chamber 130 can be arranged in the circumferential direction and the longitudinal direction, for example, as shown in Fig. 7. The numbers of the communication holes arranged in the circumferential direction and the longitudinal direction are not limited, however, for example, about two to five (three in Fig. 7) communication holes can be arranged in the circumferential direction, and one to four (four in Fig. 7) communication holes can be arranged in the longitudinal direction. Also, the hole diameter of the above first and second communication holes can be set to have a diameter of about 2 to 10 mm in case that the communication hole is circular.

As shown in Fig. 7, when the first communication holes 125 and the second communication holes 135 are arranged in the different directions (opposite directions) in the lateral direction of the inflator housing, an effect of preventing a mist from flowing outside is high, which is preferable. In other words, when a gas flow including a mist, which is generated by combustion of the gas generating agent 124 in the first gas generating chamber 120, flows out from the first communication holes 125, the gas flow including this mist (first mist) strikes against an inner wall surface of the inflator housing 102 facing the first communication holes 125, and the mist adheres to the inner wall surface. Thereafter, the gas flow in which a mist amount is reduced advances inside the inflator housing 102 towards the diffuser port 182. Then, a gas flow including a mist, which is generated by combustion of the gas generating agent 134 in the second gas generating chamber 130 strikes against an inner wall surface of the inflator housing 102 facing the second communication holes 135, and the mist adheres to the inner wall surface. Thereafter, the gas flow advances inside the inflator housing 102 towards the diffuser port 182. Since the gas flow passes through the opposite side to the inner wall surface of the inflator housing 102 where the first mist has adhered, the first mist is prevented from being scattered.

Next, the operation of the hybrid inflator 100 will be explained with reference to Fig. 8 to Fig. 10. Before the hybrid inflator 100 is activated, the pressurized medium stored in the inflator housing 102 under a high pressure has flowed into the first gas generating chamber 120 and the second gas generating chamber 130 which communicate with each other by means of the communication holes 125 and 135 respectively, and further has flowed into the charge transferring means chamber 110 through the communication holes 118, and the insides of these chambers are maintained at the same high pressure. Further, the projectile 175 is mounted so as to straddle between the charge transferring means chamber 110 and the inner space 176 which are maintained at the same pressure, and thereby, the malfunction is prevented.

In the event of a vehicle collision, the first initiator 117 is ignited by the activation signal outputting means to rupture the first rupturable plate 119 (fixed to the boss 145 forming the first communication hole 113) to ignite and burn the booster agent 112a in the charge transferring means chamber 110, thereby generating a high temperature booster gas. When the pressure inside the charge transferring means chamber 110 is increased by the generated booster gas, the projectile 175 pushed by this pressure moves to rupture the main rupturable plate 178 with the sharp tip end of the projectile 175. At that time, a portion of booster gas flows into the gas inflow space 150 due to the rupture of the main rupturable plate 178.

Most of the booster gas flows into the first gas generating chamber 120 through the flame-transferring holes 118 to ignite and burn the first gas generating agent 124, and a desired amount of a high temperature combustion gas (corresponding to the charged amount of first gas generating agent 124) is generated. At that time, since the pressurized medium has flowed into the first gas generating chamber 120 so that this camber 120 has been maintained at a high pressure, the combustion of the first gas generating agent 124 is stable. Since the charge transferring means chamber 110, the first gas generating chamber 120 and the second gas generating chamber 130 are partitioned from each other by a cylindrical housing 111 and a second partition wall 136, the second gas generating agent 134 is not ignited and burned. Because of the arrangement of the first communication hole 125 of the first gas generating chamber 120 and the second communication holes 135 of the second gas generating chamber 130, the second gas generating agent 134 is not ignited nor burnt by the combustion of the first gas generating agent 124.

Thereafter, since the high temperature combustion gas flows through the first communication hole 125 (125a to 125d) into the inflator housing 102 to increase the pressure therein, the further pressurized medium flows into the gas inflow space 150 through the ruptured main rupturable plate 178. The further pressurized medium which has flowed into the gas inflow space 150 in this manner is ejected from the diffuser port 182 after passing through the diffuser screen 186 and then, inflates the air bag mounted in the air bag module.

The second initiator 140 is ignited by the activation signal outputting means simultaneously when or slightly (about 10 to 40 ms) after the first initiator 134 is activated, and the second rupturable plate 139 (fixed to the boss 145 forming the second communication passage 133) is ruptured and then, the second gas generating agent 134 in the second gas generating chamber 130 is ignited and burnt to generate the desired amount of a high temperature combustion gas (corresponding to the charged amount of the second gas generating agent 134). At that time, since the pressurized medium has flowed into the second gas generating chamber 130 and this chamber 130 has been maintained at high pressure, the combustion state of the second gas generating agent 134 is stable.

Also, as shown in Fig. 8 and Fig. 10, the second igniting initiator 140 is arranged separately from the second communication holes 135 (135a to 135f), and thereby, the second gas generating agent 134 in the second gas generating chamber 130 is uniformly burnt. For example, if the second igniting initiator is disposed at the position shown with a reference numeral 140' in Fig. 10, the second gas generating agent 134 in the vicinity of the second communication holes 135b, 135c and 135d is smoothly burnt, but in some cases, the remaining second gas generating agent 134, particularly the one positioned on the opposite side (the position of the second igniting initiator 140 in Fig. 10) may not be burnt smoothly.

The high temperature combustion gas generated by the combustion of the second gas generating agent 134 flows into the inflator housing 102 through the second communication holes 135 to increase a pressure therein, the remaining further pressurized medium flows into the gas inflow space 150 through the ruptured main rupturable disc 178, and is ejected from the diffuser port 182 to further inflate the air bag.

In the above-described hybrid inflator, the combustion gas is generated in two stages in this manner. The first gas generating chamber 120 can act to inhibit an inflating action of the air bag from lagging at a vehicle collision, and the second gas generating chamber 130 enables to let the pressurized medium be discharged completely from the inflator housing 102 and to make the air bag inflated immediately up to the satisfying safety level. In addition, even when a mist is generated, it is prevented from flowing out externally.

Additionally, since two gas generating chambers are provided, this hybrid inflator can also be adapted to an embodiment in which a combustion gas is generated only in the first gas generating chamber 120 alone, an embodiment in which a combustion gas is generated in the first and second gas generating chambers 120 and 130 simultaneously, and an embodiment in which an interval between the timing of generating a combustion gas in the first gas generating chamber 120 and that of generating a combustion gas in the second gas generating chamber 130 is controlled in a desired manner.

### (4) Embodiment of a fourth invention

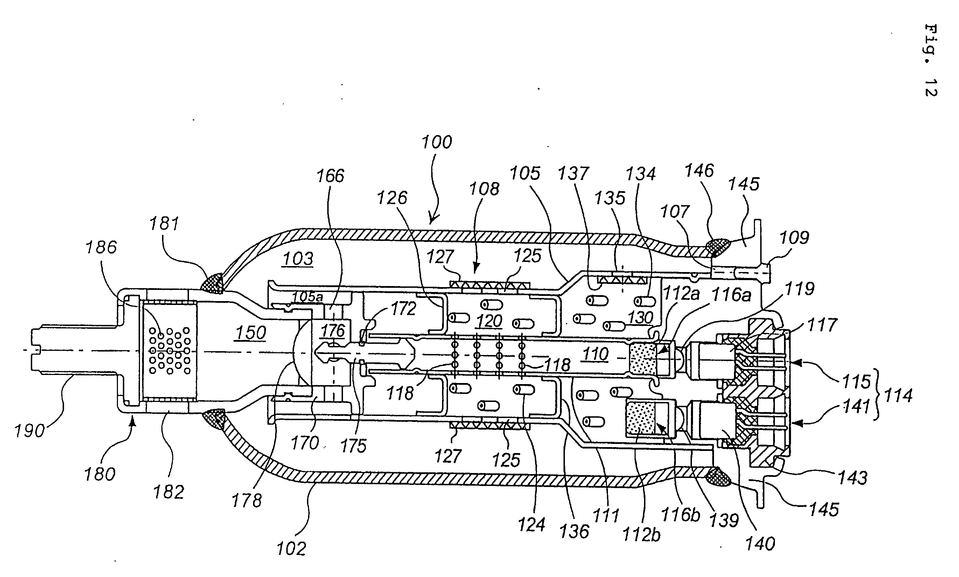

A fourth invention will be explained below in detail with reference to the drawings showing an embodiment of a fourth invention. Fig. 12 is a sectional view of an embodiment of a hybrid inflator 100 in the longitudinal direction thereof.

As shown in Fig.12, an inflator housing 102 comprises a cylindrical pressure resisting container, and its inner space 103 is filled with a pressurized medium and maintained at a high pressure. The pressurized medium is usually charged from a small hole 107 formed in a boss 145 connected to one end of the inflator housing 102, and the small hole 107 is closed with a seal pin 109 after the pressurized medium was charged. The inflator housing 102 can be formed to have an uniform outer diameter except its end portion on the side of a diffuser 180 (flat outer shape without constriction or the like).

An outer shell of a gas generator 108 is formed by a gas generator housing 105. The gas generator 108 includes, therein, a charge transferring means chamber 110, and a first gas generating chamber 120 and a second gas generating chamber 130 formed to surround the charge transferring means chamber 110 and disposed adjacent to each other in series in the longitudinal direction of the inflator housing 102. The gas generator 108 is disposed in the inflator housing 102, and its one end in its longitudinal direction is fixed to the boss 145 by welding.

The charge transferring means chamber 110 comprises a cylindrical housing 111, and is connected to a first initiator 117 through a booster cup 116a in which a booster agent (transfer charge) 112a is charged and a first communication passage closed by a first rupturable plate 119 as a first closing means. The charge transferring means chamber 110 communicates with the first gas generating chamber 120 through flame transferring holes 118.

The first gas generating chamber 120 is disposed to surround the charge transferring means chamber 110, and is defined by the gas generator housing 105, the housing 111 of the charge transferring means chamber 110, a first partition wall (first retainer) 126 and a second partition wall 136 (second retainer). A desired amount of a first gas generating agent 124 is accommodated as a gas generating means in the first gas generating chamber 120. The first gas generating chamber 120 and the inflator housing 102 communicate with each other through a plurality of first communication holes 125, and the a plurality of the first communication holes 125 are covered with a screen 127 like a wire mesh from an outer surface of the gas generating housing 105.

The second gas generating chamber 130 is defined by the gas generating housing 105, the housing 111 of the charge transferring means chamber 110, the second partition wall (second retainer) 136 and the boss 145 (and second rupturable plate 139). A desired amount of a second gas generating agent 134 is accommodated therein as a gas generating means. The second gas generating chamber 130 and the inflator housing 102 communicate with each other through a plurality of second communication holes 135 through a screen 137 like a wire mesh. The screen 137 covers a plurality of the communication holes 135 from the an inner surface of the gas generator housing 105, but it may be arranged on the outer surface of the gas generator housing 105 like the screen 127.

The second gas generating chamber 130 is connected to a second igniting initiator 140 through a second communication passage closed by the second rupturable plate 139 of a second closing means. Reference numeral 112b denotes a booster, and 116b denotes a booster cup. Incidentally, in the second gas generating chamber 130, a plurality of the second communication holes 135 are formed on the opposite side to the second igniting initiator 140 in the lateral direction (radial direction).

The second igniting initiator 140 is disposed eccentrically with respect to the center axis since the first igniting initiator 117 (first igniting means chamber 115) and the charge-transferring means chamber 110 are arranged on the center axis (a dotted line in Fig. 12) extending in the longitudinal direction of the inflator housing 102.

An amount of the second gas generating agent 134 can be equal to, larger or smaller than an amount of the first gas generating agent 124, and shapes and compositions of the first and second gas generating agents may be the same or different from each other. Volumes of the first gas generating chamber 120 and the second gas generating chamber 130 may be the same or different from each other, and the volumes can be adjusted by the first partition wall 126 and the second partition wall 136.

As described above, the charge transferring means chamber 110 communicates with the first gas generating chamber 120, the first gas generating chamber 120 communicates with the inflator housing 102, and further, the second gas generating chamber 130 communicates with the inflator housing 102. With this structure, pressures in the charge transferring means chamber 110, the first gas generating chamber 120 and the second gas generating chamber 130 are maintained at high level, i.e., at the same level as the pressure in the inflator housing 102 (inner space 103).

The first gas generating chamber 120 and the second gas generating chamber 130 are disposed adjacent to each other in series in the longitudinal direction of the inflator housing 102. By disposing these chambers in series in this manner, even when the gas generating chamber is divided into two, the entire size of the hybrid inflator can be made compact, and weight increase can be limited.

The first gas generating chamber 120 and the second gas generating chamber 130 have independent passages through which gases generated by the respective combustion of the first gas generating agent 124 and the second gas generating agent 134 flow into the inflator housing 102. That is, the gas generated in the first gas generating chamber 120 flows into the inflator housing 102 from the first communication hole 125 via the screen 127, and the gas generated in the second gas generating chamber 130 flows into the inflator housing 102 from the second communication hole 135 via the screen 137.

The first and second gas generating chambers 120, 130 are disposed in such a manner that, when the gas generated in the first gas generating chamber 120 flows towards a diffuser port 182 inside the inflator housing 102 after passing through the first communication holes 125 of an inflow passage, the second communication holes 135 which is an inflow passage of the second gas generating chamber 130 is located in the reverse direction of the gas flowing direction with respect to the first communication holes 125 which is an inflow passage of the first gas generating chamber 120.

By disposing the first and second gas generating chambers 120, 130 in this manner, combustion in the first gas generating chamber 120 does not affect the one in the second gas generating chamber 130. Such a layout is effective in that combustion in the first gas generating chamber 120 does not affect the one in the second gas generating chamber 130 when the pressurized medium does not contain oxygen. The order of disposing the first gas generating chamber 120 and the second gas generating chamber 130 may be reversed.

An ignition means chamber 114 formed in the boss 145 includes the first and second ignition means chambers 115, 141. The first ignition means chamber accommodates the first initiator 117, and the second ignition means chamber accommodates the second initiator 140. The first and second ignition means chambers can be disposed in parallel, adjacent to each other in the widthwise direction of the inflator housing 102.

The first initiator 117 and the second initiator 140 are mounted to the boss 145 through an initiator collar 143. The boss 145 is fixed to the inflator housing 102 at a connecting portion 146 by welding or the like.

An adapter 170 is connected in extension of the charge transferring means chamber 110. A projectile 175 having the illustrated shape for rupturing a main rupturable disc 178 at the time of activation is mounted, through an O-ring 172, to an opening that brings the charge transferring means chamber 110 and the adapter 170 into communication with each other such that the projectile 175 straddles the charge transferring means chamber 110 and the adapter 170. A tip end of the projectile 175 is located in the inner space 176 of the adapter 170. The inner space 176 and the inner space 103 of the inflator housing 102 communicate only through a required number of gas inflow holes 166 provided on a surface of the adapter 170 facing an inner surface of the housing 105. A gas flow path 105a is formed by the inner surface of the housing 105 and an outer surface of the adapter 170. Therefore, the pressurized medium in the inner space 103 flows into the gas inflow holes 166 inevitably through the gas flow path 105a at the time of activation.

A diffuser 180 is connected to one end of the inflator housing 102. The diffuser 180 is fixed at its connecting portion 181 by welding. The main rupturable plate 178 as the main closing means is mounted to the end of the diffuser 180 facing the projectile 175 in order to block a moving path of the pressurized medium towards the diffuser port 182 before activation. Therefore, before activation, a gas inflow space 150 and the inner space 103 of the inflator housing 102 are completely isolated from each other and thus, transmittance of the pressurized medium is blocked out.

The diffuser 180 is provided at the other end with a plurality of diffuser ports 182 for sending the pressurized medium to the air bag and also with a diffuser screen 186 for removing fine particles. A stud bolt 190 for connecting the diffuser 180 with the air bag module is fixed to the outer face of the diffuser 180.

In the hybrid inflator 100, it is preferable that the above-described constituent elements are arranged symmetrically in the widthwise direction with respect to the center axis (shown as the chain line in Fig. 12), but some or all of the constituent elements may be arranged eccentrically with respect to the center axis.

In the hybrid inflator of the present invention, the arrangement of the first and second gas generating chambers can be varied as described below.

For example, the first gas generating chamber 120 and the second gas generating chamber 130 can be arranged to face each other on the opposite sides inside the inflator housing 102. In this case, the pressurized medium is charged into the space between the first gas generating chamber 120 and the second gas generating chamber 130.

Further, for example, in the inflator housing 120, the first gas generating chamber 120 (or the second gas generating chamber 130) may be disposed to surround the charge transferring means chamber 110, and the second gas generating chamber 130 (or the first gas generating chamber 120) may be disposed to surround the first gas generating chamber 120.

In the hybrid inflator 100 of Fig. 12, the screen 127 of the gas generating chamber 120 is disposed on the outer surface of the gas generator housing 105, and thereby, even though the inner surface of the housing 105 is flat, the insertion and arrangement of the first and second partition walls 126 and 136 are not disturbed at a time of assembling. Also, the screen 137 of the second gas generating chamber 130 is disposed on the inner surface of the gas generator housing 105. As shown in the drawing, since the gas generator housing 105 in the second gas generating chamber 130 side is formed in a radially spreading shape, even if the screen 137 is arranged in advance, the insertion and arrangement of the first and second partition walls 126 and 136 are not disturbed.

The air bag system of the present invention comprises an activation-signal outputting means including an impact sensor and a control unit, and a module case in which the hybrid inflator 100 and an air bag are accommodated. The hybrid inflator 100 is connected to the activation-signal outputting means (the impact sensor and the control unit) on the side of the first initiator 117 and the second initiator 140, and the hybrid inflator 100 is connected and fixed by screwing the stud bolt 190 into the module case in which the air bag is mounted. In the air bag system having such a structure, it is possible to adjust an amount of gas generated in accordance with a degree of the impact, and to adjust the inflating speed of the air bag by appropriately setting the output condition of the activation signal in the activation-signal outputting means.

Next, the operation of the hybrid inflator 100 will be explained with reference to Fig. 12.

Before the hybrid inflator 100 is activated, the pressurized medium stored in the inflator housing 102 under a high pressure has flowed into the first gas generating chamber 120 and the second gas generating chamber 130 which communicate with each other by means of the communication holes 125 and 135 respectively, and further has flowed into the charge transferring means chamber 110 through the communication holes 118, and the insides of these chambers are maintained at the same high pressure. Further, the projectile 175 is mounted so as to straddle between the charge transferring means chamber 110 and the inner space 176 which are maintained at the same pressure, and thereby, the malfunction is prevented.

In the event of a vehicle collision, the first initiator 117 is ignited by the activation signal outputting means to rupture the first rupturable plate 119 (fixed to the boss 145 forming the first communication hole 113) to ignite and burn the booster agent 112a in the charge transferring means chamber 110, thereby generating a high temperature booster gas. When the pressure inside the charge transferring means chamber 110 is increased by the generated booster gas, the projectile 175 pushed by this pressure moves to rupture the main rupturable plate 178 with the sharp tip end of the projectile 175. At that time, a portion of booster gas flows into the gas inflow space 150 due to the rupture of the main rupturable plate 178.

Most of the booster gas flows into the first gas generating chamber 120 through the flame-transferring holes 118 to ignite and burn the first gas generating agent 124, and a desired amount of a high temperature combustion gas (corresponding to the charged amount of first gas generating agent 124) is generated. At that time, since the pressurized medium has flowed into the first gas generating chamber 120 so that this camber 120 has been maintained at a high pressure, the combustion of the first gas generating agent 124 is stable. Since the charge transferring means chamber 110, the first gas generating chamber 120 and the second gas generating chamber 130 are partitioned from each other by a cylindrical housing 111 and a second partition wall 136, the second gas generating agent 134 is not ignited and burned. Because of the arrangement of the first communication hole 125 of the first gas generating chamber 120 and the second communication holes 135 of the second gas generating chamber 130, the second gas generating agent 134 is not ignited nor burnt by the combustion of the first gas generating agent 124.

Thereafter, since the high temperature combustion gas flows through the first communication hole 125 into the inflator housing 102 to increase the pressure therein, the further pressurized medium flows into the gas inflow space 150 through the ruptured main rupturable plate 178. The further pressurized medium which has flowed into the gas inflow space 150 in this manner is ejected from the diffuser port 182 after passing through the diffuser screen 186 and then, inflates the air bag mounted in the air bag module.

The second initiator 140 is ignited by the activation signal outputting means simultaneously when or slightly (about 10 to 40 ms) after the first initiator 134 is activated, and the second rupturable plate 139 (fixed to the boss 145 forming the second communication passage) is ruptured, the booster 112b is ignited and burnt, and then, the second gas generating agent 134 in the second gas generating chamber 130 is ignited and burnt to generate the desired amount of a high temperature combustion gas (corresponding to the charged amount of the second gas generating agent 134). At that time, since the pressurized medium has flowed into the second gas generating chamber 130 and this chamber 130 has been maintained at high pressure, the combustion state of the second gas generating agent 134 is stable.

Also, as shown in Fig. 12, the second igniting initiator 140 is arranged separately from the second communication hole 135 in a radially different direction, and thereby, the second gas generating agent 134 in the second gas generating chamber 130 is burnt uniformly. For example, if the second communication hole 135 is disposed at a position close to the second igniting initiator 140, the second gas generating agent 134 in the vicinity of the second communication hole 135 is burnt smoothly, but, in some cases, the second gas generating agent 134 positioned far from the second communication hole 135 may not be burnt smoothly.

The high temperature combustion gas generated by the combustion of the second gas generating agent 134 flows into the inflator housing 102 through the second communication holes 135 to increase a pressure therein, the remaining further pressurized medium flows into the gas inflow space 150 through the ruptured main rupturable disc 178, and is ejected from the diffuser port 182 to further inflate the air bag.

In the above-described hybrid inflator, the combustion gas is generated in two stages in this manner. The first gas generating chamber 120 can act to inhibit an inflating action of the air bag from lagging at a vehicle collision, and the second gas generating chamber 130 enables to let the pressurized medium be discharged completely from the inflator housing 102 and to make the air bag inflated immediately up to the satisfying safety level. In addition, even when a mist is generated, it is prevented from flowing out externally. Additionally, since two gas generating chambers are provided, this hybrid inflator can also be adapted to an embodiment in which a combustion gas is generated only in the first gas generating chamber 120 alone, an embodiment in which a combustion gas is generated in the first and second gas generating chambers 120 and 130 simultaneously, and an embodiment in which an interval between the timing of generating a combustion gas in the first gas generating chamber 120 and that of generating a combustion gas in the second gas generating chamber 130 is controlled in a desired manner.

## Claims

1. A multistage-inflating type hybrid inflator for an inflating-type safety system of a vehicle provided with an air bag, which comprises an inflator housing, a gas generator installed in the inflator housing, and an ignition means chamber connected to the gas generator, wherein the interior of the inflator housing is filled with a pressurized medium containing an inert gas, the gas generator has first and second gas generating chambers including a gas generating means respectively, and a blocking means of a gas flow, which flows out from the first communication hole, is formed at least to surround the first gas generating chamber and between the first communication hole, through which the first gas generating chamber and the inflator housing communicate with each other, and an inflator housing inner wall surface.

2. A multistage-inflating type hybrid inflator according to claim 1, comprising a principal closing means to close, before actuation, a route of the pressurized medium to a discharging port leading outside, and a projectile which utilizes pressure to rupture the principal closing means at the actuation, a tip end of the projectile disposed in the same space as the space, inside the inflator housing, where the pressurized medium is charged.

3. A multistage-inflating type hybrid inflator according to claim 1 or 2, wherein the blocking means of a gas flow is a plate-like member mounted to surround and cover at least the first communication hole or a cylindrical member having an opening.

4. A multistage-inflating type hybrid inflator according to any one of claims 1 to 3, wherein the first gas generating chamber and the inflator housing communicate with each other, and the second gas generating chamber and the inflator housing communicate with each other.

5. A multistage-inflating type hybrid inflator for an inflating-type safety system of a vehicle provided with an air bag, which comprises an inflator housing, a gas generator installed in the inflator housing, and an ignition means chamber connected to the gas generator, wherein the interior of the inflator housing is filled with a pressurized medium containing an inert gas, the gas generator has first and second gas generating chambers including a gas generating means respectively, and, a plurality of first communication holes through which the first gas generating chamber and the inflator housing communicate with each other and a plurality of second communication holes through which the second gas generating chamber and the inflator housing communicate with each other are formed such that some or all of the respective communication holes are directed differently in the lateral direction of the inflator housing.

6. A multistage-inflating type hybrid inflator according to claim 5, comprising a principal closing means to close, before actuation, a route of the pressurized medium to a discharging port leading outside, and a projectile which utilizes pressure to rupture the principal closing means at the actuation, a tip end of the projectile being disposed in the same space as the space, inside the inflator housing, where the pressurized medium is charged.

7. A multistage-inflating type hybrid inflator according to claim 5 or 6, wherein a plurality of the first communication holes and a plurality of second communication holes are formed so that one of the first communication holes and one of the second communication holes are directed differently to form the angle of 180° between themselves in the lateral direction, and the remaining communication holes are formed to have an angle(s) in the range of 0° to 180° in the lateral direction of the inflator housing.

8. A multistage-inflating type hybrid inflator according to claim 5 or 6, wherein a plurality of the first and second communication holes are formed to have angle in the range of 60° to 180° in the lateral direction of the inflator housing.

9. A multistage-inflating type hybrid inflator according to claim 8, wherein all of a plurality of the first and second communication holes are formed to be directed differently and have the same angle.

10. A multistage-inflating type hybrid inflator according to claim 8, wherein, when the first gas generating chamber and the second gas generating chamber are divided equally into two parts in the lateral direction respectively, all of a plurality of the first communication holes are arranged on one side of the two parts in the lateral direction, and all of a plurality of the second communication holes are arranged on the other side of the two parts in the lateral direction.

11. A hybrid inflator for an inflating-type safety system of a vehicle provided with an air bag, which comprises an inflator housing, a gas generator installed in the inflator housing, and an ignition means chamber having an ignition means connected to the gas generator, wherein
the interior of the inflator housing is filled with a pressurized medium containing an inert gas,
the gas generator has a gas generating chamber including a gas generating means, the gas generating chamber and the inflator housing communicate with each other through a plurality of communication holes, and
a plurality of the communication holes are disposed to be separated from the igniting means in the lateral direction and/or the longitudinal direction of the inflator housing.

12. A hybrid inflator according to claim 11, wherein the igniting means connected to the gas generating chamber is arranged eccentrically with respect to the center axis in the longitudinal direction of the inflator housing.

13. A hybrid inflator for an inflating-type safety system of a vehicle provided with an air bag, which comprises an inflator housing, a gas generator installed in the inflator housing, and an ignition means chamber connected to the gas generator, wherein
the interior of the inflator housing is filled with a pressurized medium containing an inert gas,
the gas generator has first and second gas generating chambers including a gas generating means respectively, the first gas generating chamber is connected to a first igniting means chamber provided with a first igniting means, the second gas generating chamber is connected to a second igniting means chamber provided with a second igniting means,
the first gas generating chamber and the inflator housing communicate with each other through a plurality of first communication holes, the second gas generating chamber and the inflator housing communicate with each other through a plurality of second communication holes, and
a plurality of the second communication holes are disposed to be separated from the second igniting means in the lateral direction and/or the longitudinal direction of the inflator housing.

14. A hybrid inflator according to claim 13, wherein the gas generator is arranged in extension of the longitudinal direction of the first igniting means chamber and has a charge-transferring means chamber which communicates with the first gas generating chamber, and the second igniting means connected to the second gas generating chamber is arranged eccentrically with respect to the center axis in the longitudinal direction of the inflator housing.

15. A hybrid inflator according to claim 13 or 14, wherein the first igniting means and the second igniting means are arranged in parallel and adjacently to each other in the lateral direction of the inflator housing, and the first igniting means chamber is arranged on the center axis in the longitudinal direction of the inflator housing.

16. A hybrid inflator according to any one of claims 13 to 15, wherein the first igniting means chamber communicates with the first gas generating chamber through the first communication passage, the first communication passage is closed by the first closing means before actuation of the first igniting means, and the second igniting means chamber communicates with the second gas generating chamber through the second communication holes, the second communication passage is closed by the second closing means before actuation of the igniting means.

17. A hybrid inflator according to any one of claims 11 to 16, wherein all of a plurality of the communication holes and a plurality of the second communication holes are directed differently in the lateral direction of the igniting means or the second igniting means, and the inflator housing.

18. A hybrid inflator according to any one of claims 11 to 17, wherein all of a plurality of the communication holes and a plurality of the second communication holes are directed differently to form the angle of 90° or more in the lateral direction of the igniting means or the second igniting means, and the inflator housing.

19. A hybrid inflator for an inflating-type safety system of a vehicle provided with an air bag, which comprises an inflator housing, a gas generator installed in the inflator housing, and an ignition means chamber having an ignition means connected to the gas generator, wherein
the interior of the inflator housing is filled with a pressurized medium containing an inert gas,
the gas generator has an outer shell formed of a gas generator housing and a gas generating chamber including a gas generating means inside the gas generator housing, the gas generating chamber and the inflator housing communicate with each other through a plurality of communication holes provided in the gas generator housing, and
a screen is provided on outer surface of the gas generator housing at a position where at least a plurality of the communication holes are covered from the outside.

20. A hybrid inflator according to claim 19, wherein a concave for disposing the screen is not provided on an inner surface of the gas generator housing, and a retainer for adjusting an amount of the agents is arranged by being inserted into the gas generator housing from one end opening.

21. A hybrid inflator for an inflating-type safety system of a vehicle provided with an air bag, which comprises an inflator housing, a gas generator installed in the inflator housing, and an ignition means chamber having an ignition means connected to the gas generator, wherein
the interior of the inflator housing is filled with a pressurized medium containing an inert gas,
the gas generator has an outer shell formed of a gas generator housing and first gas generating chamber and second gas generating chamber including a gas generating means respectively in the gas generator housing, a first communication hole and a second communication hole are provided in the gas generator housing, the first gas generating housing and the inflator housing communicate with each other through the first communication hole, the second gas generating chamber and the inflator housing communicate with each other through the second communication hole, and
a screen is provided on an outer surface of the gas generator housing at a position where at least the first communication hole and/or the second communication hole are covered from the outside.

22. A hybrid inflator according to claim 21, wherein a convex for disposing the screen is not provided on an inner surface of the gas generator housing, and a retainer for adjusting an amount of the agents and/or for partitioning the first gas generating chamber and the second gas generating chamber from each other is arranged by being inserted into the gas generator housing from one end opening.

23. A multistage-inflating type hybrid inflator according to any one of claims 1 to 10, 13 to 18, 21 and 22, wherein inflow passages of gases generated in the first and second gas generating chambers towards the inflator housing are independent of each other.

24. A multistage-inflating type hybrid inflator according to claim 23, wherein, when the gas generated in the first gas generating chamber flows inside the inflator housing, passing through the independent inflow passage, an inflow passage of the second gas generating chamber is located in the reverse direction of the gas flowing direction with respect to the inflow passage of the first gas generating chamber.

25. A multistage-inflating type hybrid inflator according to any one of claims 1 to 10, 13 to 18 and 21 to 24, wherein the first and second gas generating chamber are arranged in series and adjacently to each other in the longitudinal direction of the inflator housing.

26. A multistage-inflating type hybrid inflator according to any one of claims 1 to 10, 13 to 18 and 21 to 24, wherein the first and second gas generating chamber are arranged in series and oppositely to each other in the longitudinal direction of the inflator housing.

27. A multistage-inflating type hybrid inflator according to any one of claims 1 to 10, 13 to 18 and 21 to 24, wherein the first and second gas generating chamber are arranged in parallel and adjacently to or separately from each other in the lateral direction of the inflator housing.

28. A multistage-inflating type hybrid inflator according to any one of claims 1 to 10, and 23 to 27, wherein the igniting means chamber has a first igniting chamber and a second igniting chamber which include igniting means respectively, the first igniting chamber communicates with the first gas generating chamber through a first communication passage, the first communication passage is closed by a first closing means before actuation of a first igniting means, the second igniting chamber communicates with the second gas generating chamber through a second communication passage and the second communication passage is closed by a second closing means before actuation of the igniting means.

29. A multistage-inflating type hybrid inflator according to claim 28, wherein the first igniting chamber and the second igniting chamber are arranged in parallel and adjacently to each other in the lateral direction of the inflator housing.

30. A multistage-inflating type hybrid inflator according to any one of claims 1 to 10, and 23 to 29, wherein the gas generator has further a charge-transferring means chamber, and the charge-transferring means chamber and the first gas generating chamber communicate with each other.

31. A hybrid inflator according to any one of claims 11 to 18, wherein a principal closing means which closes a route of the pressurized medium to a discharging port leading outside before actuation is ruptured at a time of actuation.

32. An air bag system including an actuation signal-outputting means which comprises an impact sensor and a control unit, and a module case which accommodates a multistage-inflating type hybrid inflator according to any one of claims 1 to 10 and 23 to 30 and an air bag therein, wherein an inflating speed of the air bag is set adjustable.

33. An air bag system including an actuation signal-outputting means which comprises an impact sensor and a control unit, and a module case which accommodates a hybrid inflator according to any one of claims 11 to 27 and 31 and an air bag therein.
